# FASCICULE DE BREVET EUROPEEN

(11) **EP 4 237 932 B1**
(45) Date de publication et mention de la délivrance du brevet: **28.10.2026**
(21) Numéro de dépôt: 21805435.1
(22) Date de dépôt: 29.10.2021
(51) Int. Cl.: G06F 3/039, G06F 3/044

(54) **DISPOSITIF DE SAISIE DE DONNÉES DESTINÉ À ÊTRE APPOSÉ SUR UNE DALLE TACTILE D'UN TERMINAL ET PROCÉDÉ DE SAISIE CORRESPONDANT**
DATENEINGABEVORRICHTUNG ZUR ANBRINGUNG AN EINEM BERÜHRUNGSBILDSCHIRM EINES ENDGERÄTS UND ENTSPRECHENDES EINGABEVERFAHREN
DATA INPUT DEVICE DESIGNED TO BE AFFIXED TO A TOUCH SCREEN OF A TERMINAL AND CORRESPONDING INPUT METHOD

(30) Priorité: 30.10.2020 FR 2011165
(43) Date de publication de la demande: 06.09.2023
(73) Titulaire: Banks and Acquirers International Holding, 75015 Paris (FR)
(72) Inventeur: PAVAGEAU, Stéphane, 26600 LA ROCHE DE GLUN (FR); COUSSIEU, Alain, 07000 FLAVIAC (FR); BLANC, Olivier, 26600 PONT DE L'ISERE (FR)
(74) Mandataire: Germain Maureau
(86) Numéro de dépôt international: PCT/EP2021/080215
(87) Numéro de publication internationale: WO 2022/090517

(56) Documents cités:
- EP-A1- 3 451 139
- EP-A1- 3 582 090

## Description

### Domaine de l'invention

La présente technique se rapporte au domaine de la saisie de données sur des terminaux (téléphones mobiles, ordinateurs, tablettes, terminaux de paiement, distributeurs automatiques de billets (DAB), terminaux de communication, qui se transforment provisoirement en terminaux de paiement, etc.).

Plus précisément, la présente technique concerne un dispositif de saisie de données destiné à être apposé sur une dalle tactile d'un terminal (aussi appelée « écran tactile », ou encore « touch screen » ou « touch panel » en anglais).

La présente technique s'applique notamment, mais non exclusivement, à la saisie de codes confidentiels ou de codes d'identification personnels (ou code PIN pour « Personal Identification Number » en anglais) sur une dalle tactile d'un terminal, par exemple pour les personnes malvoyantes.

### Art antérieur

Les écrans tactiles sont largement utilisés pour saisir des données au sein de systèmes informatisés de traitement de données, ci-après regroupés selon le terme terminaux. Par exemple, les téléphones mobiles, les ordinateurs, les tablettes, ou encore les terminaux de paiement et les distributeurs automatiques de billets (DAB) disposent d'écrans tactiles pour faciliter la saisie des données par les utilisateurs.

Pour effectuer une saisie, un utilisateur peut sélectionner une ou plusieurs touches (associées chacune à un caractère alphanumérique) sur un clavier virtuel affiché sur l'écran tactile, en utilisant un doigt ou un stylet. Il n'est ainsi plus nécessaire de disposer d'un clavier physique pour saisir des données. Cependant, la saisie des données avec un clavier virtuel présente des inconvénients, notamment pour les personnes malvoyantes, mais également pour les personnes technophobes ou peu coutumières des usages numériques. Ainsi, à la différence des claviers physiques, les claviers virtuels sont affichés sur un écran plat et ne permettent pas à certains utilisateurs (notamment aux personnes malvoyantes) de se repérer spatialement sur les touches virtuelles.

Cet inconvénient est en particulier gênant pour les terminaux de paiement ou les distributeurs automatiques de billets (DAB) qui disposent d'un écran tactile. En effet, lorsqu'un utilisateur utilise sa carte bancaire pour effectuer un paiement ou pour retirer des billets, il doit saisir son code PIN pour s'authentifier. Il n'est pas possible pour une personne malvoyante de saisir son code PIN sur un clavier virtuel affiché sur un écran tactile.

Dans de nombreux pays déjà, des directives obligent les commerçants et banquiers à fournir une solution pour les personnes malvoyantes.

On connait une solution de l'état de la technique qui consiste à toujours fournir un clavier physique électronique relié à un terminal de paiement, même si un clavier virtuel est disponible sur l'écran tactile. Le coût de fabrication des terminaux de paiement ou des distributeurs automatiques de billets (DAB) ainsi équipé est donc augmenté, sans que la solution soit réellement intéressante, notamment des points de vue technique et esthétique. En effet, le clavier physique destiné aux personnes malvoyantes doit être sécurisé pour éviter le piratage, augmentant le coût, et ce clavier n'est généralement pas esthétiquement intégré dans la solution tactile.

Pour remédier à au moins certains de ces inconvénients, la demanderesse a développé une grille de saisie de données à apposer sur la dalle tactile, comme décrit dans la demande de brevet FR 3 070 519. Cette grille de saisie, généralement fabriquée en plastique transparent, reproduit un clavier classique présentant dix touches numériques et des touches de fonction.

Comme décrit dans cette demande de brevet, la grille de saisie comprend, sur sa face inférieure, au moins deux pastilles de contact conductrices électriquement qui permettent, lorsque la grille de saisie est apposée sur la dalle tactile, d'interagir avec la dalle tactile lors des cycles de balayage capacitif de cette dernière. Le terminal peut donc détecter l'apposition et l'orientation de la grille de saisie grâce à la détection des pastilles de contact. De plus, connaissant l'orientation de la grille de saisie sur la dalle tactile, et donc la position sur la dalle tactile de chacune des zones de saisie (formant touches de saisie) de la grille, le terminal peut, à chaque fois qu'il détecte un appui d'un doigt de l'utilisateur sur la dalle tactile à travers l'une des zones de saisie de la grille, déterminer à quel caractère de clavier ou fonction de clavier correspond cet appui.

Un inconvénient de cette solution réside dans le fait que les pastilles de contact situées sous la grille, qui permettent la détection de cette dernière par le terminal, ne sont pas détectées efficacement/précisément par tous les types de terminaux. En effet, selon les différentes sensibilités des dalles tactiles et les logiciels d'auto-étalonnage mis en œuvre, ces points de contact peuvent ne pas être détectés ou engendrent des interférences et ne sont donc pas reconnus comme constituant des points de contact d'une grille de saisie de données apposée sur la dalle tactile. Par conséquent, il existe un fort risque pour que la grille de saisie et/ou que les appuis sur la dalle tactile par l'utilisateur ne soient pas détectés correctement par certains terminaux.

Il existe ainsi un besoin de fournir une solution permettant aux utilisateurs de saisir des données confidentielles sur des terminaux (terminaux de paiement et terminaux de communication par exemple) comprenant un écran tactile, en assurant une compatibilité de cette solution avec tous types de terminaux.

Cette solution doit être simple à mettre en œuvre et doit également assurer la sécurité des données saisies, tout en conservant un coût relativement faible lors de son utilisation sur un écran tactile.

En outre, cette solution doit également être ergonomique et proposer une prise en main optimale pour les utilisateurs, et notamment pour les malvoyants.

### Résumé de l'invention

La technique proposée permet de résoudre au moins certains des problèmes de l'art antérieur. Plus particulièrement, la présente technique se rapporte à un dispositif de saisie de données destiné à être apposé sur une dalle tactile d'un terminal, la dalle tactile étant capacitive, le dispositif de saisie de données comprenant :
- une plaque sensiblement parallélépipédique comprenant une face inférieure, sensiblement plane, d'apposition du dispositif sur la dalle tactile, et une face supérieure comprenant une matrice de zones de saisie formant clavier, les zones de saisie étant configurées pour permettre une détection d'un doigt d'un utilisateur par la dalle tactile quand le dispositif est apposé sur la dalle tactile ;
- au moins deux pastilles de contact indépendantes l'une de l'autre, conductrices électriquement et disposées sur la face inférieure.

Selon la technique proposée, les pastilles de contact sont chacune reliées électriquement à des moyens additionnels d'évacuation, vers l'extérieur de la dalle tactile, des charges électriques concentrées au niveau des pastilles de contact lorsque le dispositif de saisie de données est apposé et maintenu sur la dalle tactile.

Ainsi, la technique proposée permet une évacuation des charges électriques vers l'extérieur de l'écran afin de supprimer les interférences sur la dalle tactile du terminal habituellement créées par les pastilles de contact du dispositif de saisie de données. Ainsi les problèmes de détection du dispositif de saisie sont supprimés. Un tel dispositif est donc compatible avec tous les types de terminaux.

Selon un aspect particulier, les moyens d'évacuation évacuent, vers le corps de l'utilisateur, les charges électriques concentrées au niveau des pastilles de contact lorsque le dispositif de saisie de données est apposé et maintenu, via les moyens d'évacuation, par l'utilisateur sur la dalle tactile d'un terminal.

De cette manière, l'évacuation des charges électrique vers l'extérieur de l'écran est effectuée au travers du corps de l'utilisateur. Cette solution s'avère relativement simple à mettre en œuvre et ne nécessite aucune modification du dispositif de saisie de données (y compris aucun ajout de composants électroniques et/ou logiciels) afin de supprimer les interférences sur la dalle tactile du terminal habituellement créées par les pastilles de contact du dispositif de saisie de données. Ainsi les problèmes de détection du dispositif de saisie sont supprimés. Une telle solution supprime en outre tous les risques de non compatibilité du dispositif de saisie de données avec certains types de terminaux.

Selon un autre aspect particulier, lesdites au moins deux pastilles de contact sont respectivement reliées électriquement auxdits moyens d'évacuation par une résistance électrique.

Selon un autre aspect particulier, les moyens d'évacuation des charges électriques comprennent au moins une surface de maintien, par un doigt de l'utilisateur, du dispositif de saisie sur la dalle tactile, ladite au moins une surface de maintien étant reliée électriquement à chacune desdites au moins deux pastilles de contact, respectivement via une languette conductrice.

Une languette conductrice permettant de relier électriquement les pastilles de contact au corps de l'utilisateur est relativement simple à mettre en œuvre et est simple d'utilisation pour l'utilisateur. En effet, ce dernier n'a aucun geste particulier à effectuer puisque la liaison électrique entre le corps de l'utilisateur et les pastilles de contact nait de l'appui de l'utilisateur avec son doigt sur la languette conductrice disposée sur la surface de maintien.

Selon un autre aspect, les moyens d'évacuation des charges électriques comprennent une première surface de maintien et une deuxième surface de maintien du dispositif de saisie de données sur la dalle tactile, les première et deuxième surfaces de maintien se présentant respectivement sous la forme d'une cavité conformée selon une empreinte d'un pouce gauche et selon une empreinte d'un pouce droit.

Cette mise en œuvre particulière améliore l'ergonomie en facilitant la prise en main et l'identification de la surface de maintien pour l'utilisateur malvoyant. Elle facilite donc également le maintien du dispositif de saisie sur la dalle tactile. De plus, ces empreintes jouent le rôle de détrompeur et permettent de disposer correctement (dans le bon sens) le dispositif de saisie sur la dalle tactile. Le dispositif de saisie est également ergonomique et compatible avec un utilisateur droitier ou gaucher.

Selon encore un autre aspect, les languettes conductrices s'étendent chacune à travers lesdites première et deuxième surfaces de maintien du dispositif de saisie de données.

Ainsi, les pastilles de contact sont reliées électriquement à chacune des empreintes via une languette. Cette solution technique est simple et peu coûteuse puisqu'elle ne nécessite pas de mettre en œuvre une languette reliant chaque pastille de contact avec chaque empreinte. En effet, une même languette permet ici de relier une pastille de contact aux deux empreintes.

Selon un autre aspect, la première surface de maintien est reliée électriquement à une première pastille de contact via une première languette conductrice et à une deuxième pastille de contact via une deuxième languette conductrice et la deuxième surface de maintien est reliée électriquement à la première pastille de contact via la première languette conductrice et à la deuxième pastille de contact via la deuxième languette conductrice.

Cette disposition particulière des languettes conductrices, qui relient électriquement chaque surface de maintien à chacune des pastilles de contact, est optimale en termes de fonctionnement et de coût de fabrication. En effet, la mise en œuvre d'une languette conductrice reliant chaque pastille de contact aux deux surfaces de maintien minimise les risques de mauvais contact lorsque l'utilisateur maintien le dispositif de saisie de données, notamment. De plus, cette disposition évite également la mise en œuvre de quatre languettes reliant chacune une languette à une pastille de contact.

Selon un autre aspect de la technique proposée, les moyens d'évacuation des charges électriques comprennent un levier actionnable par un utilisateur et relié électriquement avec lesdites au moins deux pastilles de contact de sorte à évacuer les charges électriques concentrées au niveau des pastilles de contact lorsque le dispositif de saisie de données est apposé sur la dalle tactile.

Un levier permettant de relier électriquement les pastilles de contact au corps de l'utilisateur est relativement simple à mettre en œuvre et est simple d'utilisation pour l'utilisateur. En effet, ce dernier n'a aucun geste particulier à effectuer puisque la liaison électrique entre le corps de l'utilisateur et les pastilles de contact nait du simple contact de l'utilisateur avec le levier qui lui sert pour apposer et maintenir la grille sur la dalle tactile, le levier étant en permanence relié électriquement aux pastilles de contact.

Selon un autre aspect, le levier est mobile entre au moins une position relevée, dans laquelle le levier peut être tenu par au moins deux doigts de l'utilisateur formant une pince, et une position abaissée, dans laquelle le levier est en position non utilisée.

Ainsi, le dispositif de saisie de données peut être aisément maintenu en place et utilisé par l'utilisateur, que la dalle tactile s'étende horizontalement ou de manière inclinée, notamment. De plus, la position abaissée du levier, donc lorsque le dispositif de saisie de données n'est pas utilisé, permet de transporter ce dernier de manière pratique, car le levier se trouve dans le même plan que le dispositif de saisie de données.

Selon un autre aspect, le levier présente des moyens de rappel configurés pour rappeler le levier de la position relevée vers la position abaissée.

Ainsi, lorsque l'utilisateur a terminé d'utiliser le dispositif de saisie de données et relâche donc le levier, ce dernier est abaissé automatiquement et le stockage du dispositif de saisie de données est facilitée. En outre, ce ressort de rappel assure un plaquage optimal de la surface inférieure de la plaque sur la dalle tactile du terminal lorsque le levier est tenu par l'utilisateur.

Selon un autre aspect particulier, la matrice de zones de saisie formant clavier comprend un premier sous-ensemble de dix touches numériques et un deuxième sous-ensemble de trois touches de fonction, les symboles des touches de fonction étant conformés en relief négatif sur la face supérieure à la face inférieure.

Ainsi, la détermination des symboles par un utilisateur est facilitée, que l'utilisateur soit malvoyant ou non. De plus, de telles touches traversantes permettent une détection efficace, par le terminal, de l'appui par un utilisateur. En effet, ces touches en relief négatif, par exemple creusées ou traversantes permettent une meilleure détection qu'avec des symboles en relief faisant saillie car des symboles faisant saillis éloignent le doigt de l'utilisateur de la dalle tactile.

Selon un autre aspect, le dispositif (1) de saisie de données comprend au moins un angle biseauté (115).

Ainsi, il est aisé, pour un utilisateur malvoyant notamment, de déterminer l'orientation du dispositif de saisie de données et de placer correctement ce dernier sur la dalle tactile du terminal.

Selon encore un autre aspect, le dispositif de saisie de données comprend en outre, sur sa face inférieure, des moyens d'adhésion/solidarisation réversibles du dispositif de saisie de données sur le terminal.

Selon un aspect particulier, les moyens d'adhésion/solidarisation réversibles se présentent sous la forme d'au moins un coussinet fabriqué dans un matériau souple et adhérent.

La mise en œuvre d'un tel coussinet permet d'assurer un maintien efficace du dispositif de saisie de données sur la dalle tactile du terminal de sorte à faciliter l'utilisation du dispositif par un utilisateur.

La technique proposée se rapporte également à un procédé de saisie de données sur une dalle tactile d'un terminal, le procédé comprenant :
- une étape de pose, sur une dalle tactile du terminal, d'un dispositif de saisie de données tel que décrit précédemment ;
- une étape de liaison capacitive entre les pastilles de contact et la dalle tactile du terminal ;
- une étape de détection, par le terminal, de la position et de l'orientation du dispositif de saisie de données basée sur une détection desdites au moins deux pastilles de contact ;
- une étape de saisie, par un utilisateur, de données sur la surface du dispositif de saisie de données ;
- une étape de détection, par le terminal, des données saisies sur la surface du dispositif de saisie de données basée sur une détection d'au moins un appui d'un doigt de l'utilisateur sur une des zones de saisie formant clavier ; et
- une étape de validation, par un utilisateur, des données saisies.

Selon la technique proposée, le procédé comprend en outre une étape d'évacuation, via des moyens d'évacuation, des charges électriques concentrées au niveau des pastilles de contact tant que le dispositif de saisie de données est apposé sur la dalle tactile du terminal.

Selon un aspect particulier, l'étape d'évacuation des charges électriques concentrées au niveau des pastilles de contact se réalise vers le corps de l'utilisateur, via les moyens d'évacuation, tant que le dispositif de saisie de données est apposé et maintenu, via les moyens d'évacuation, par l'utilisateur sur la dalle tactile du terminal.

### Liste des Figures

La technique proposée, ainsi que les différents avantages qu'elle présente, seront plus facilement compris à la lumière de la description qui va suivre de deux modes de réalisation illustratifs et non limitatifs de celle-ci, de leurs variantes, et des dessins annexés parmi lesquels :
- [Fig 1] illustre une vue en perspective de face d'un dispositif de saisie de données à apposer sur la dalle tactile d'un terminal selon un premier mode de réalisation de la technique proposée ;
- [Fig 2] illustre une vue en perspective du dessous du dispositif de saisie de données de la figure 1 ;
- [Fig 3] illustre une vue éclatée d'une variante du dispositif de saisie de données de la figure 1 ;
- [Fig 4] est une vue de détail illustrant en perspective une surface de maintien du dispositif de saisie de données de la figure 3 ;
- [Fig 5] illustre une vue en coupe d'une pastille de contact du dispositif de saisie de données de la figure 3 ;
- [Fig 6] illustre une vue en coupe d'une pastille de contact et d'une surface de maintien du dispositif de saisie de données de la figure 3 ;
- [Fig 7] est une vue de détail illustrant partiellement la face inférieure du dispositif de saisie de données de la figure 3 ;
- [Fig 8] illustre une vue en perspective de trois-quarts face d'un dispositif de saisie de données à apposer sur la dalle tactile d'un terminal selon un deuxième mode de réalisation de la technique proposée, cette figure montrant les moyens d'évacuation dans une première position ;
- [Fig 9] illustre une vue en perspective de trois-quarts dos du dispositif de saisie de données de la figure 8 montrant les moyens d'évacuation dans une deuxième position ;
- [Fig 10] illustre une autre vue en perspective du dispositif de saisie de données de la figure 8 ;
- [Fig 11] illustre une vue en perspective de dessous du dispositif de saisie de données de la figure 8 ;
- [Fig 12] illustre une première variante de réalisation de la matrice de zones de saisie formant clavier d'un dispositif de saisie de données selon le premier ou le deuxième mode de réalisation ;
- [Fig 13] illustre une deuxième variante de réalisation de la matrice de zones de saisie formant clavier d'un dispositif de saisie de données selon le premier ou le deuxième mode de réalisation ;
- [Fig 14] est une vue partielle montrant une troisième variante de réalisation de la matrice de zones de saisie formant clavier d'un dispositif de saisie de données selon le premier ou le deuxième mode de réalisation ;
- [Fig 15] est une autre vue montrant partiellement la troisième variante de la matrice de zones de saisie formant clavier de la figure 14 ;
- [Fig 16] illustre une première variante des moyens d'adhérence du dispositif de saisie de données selon le premier ou le deuxième mode de réalisation ;
- [Fig 17] illustre une deuxième variante des moyens d'adhérence du dispositif de saisie de données selon le premier ou le deuxième mode de réalisation ;
- [Fig 18] est une vue de côté montrant les moyens d'adhérence du dispositif de saisie de données de la figure 17 ;
- [Fig 19] est une vue de face montrant un dispositif de saisie selon le premier mode de réalisation apposé sur une dalle tactile d'un smartphone ;
- [Fig 20] est une autre vue de face montrant un dispositif de saisie selon le premier mode de réalisation apposé sur une dalle tactile d'un smartphone ;
- [Fig 21] est encore une autre vue de face montrant un dispositif de saisie selon le premier mode de réalisation apposé sur une dalle tactile d'un smartphone ;
- [Fig 22] est une vue de face montrant un dispositif de saisie selon le premier mode de réalisation apposé sur une dalle tactile d'une tablette tactile ; et
- [Fig 23] illustre un organigramme d'un procédé de saisie de données sur une dalle tactile d'un terminal à l'aide d'un dispositif de saisie de données selon la technique proposée.

### Description détaillée de la technique proposée

### Principe général

Le principe général de l'invention consiste à proposer un dispositif physique de saisie de données destiné à être apposé sur un écran tactile d'un terminal. Le dispositif comprend une plaque comprenant une surface supérieure et une surface inférieure globalement plane. La face supérieure comprend une matrice de zones de saisie formant clavier.

La plaque, au niveau de la matrice de zones de saisie, est configurée pour qu'un contact/appui de l'utilisateur sur cette matrice soit détecté par l'écran tactile au travers de la plaque. Lorsque le dispositif est apposé sur l'écran tactile (que ce soit librement ou sur une zone spécifique de cet écran), l'utilisateur (par exemple une personne malvoyante) peut toucher directement les touches sur la matrice de zones de saisie pour entrer des caractères sur l'écran tactile.

Dans ce mode de réalisation général, il n'est pas nécessaire de disposer de composants électriques supplémentaires pour détecter les touches sur les zones de saisie du dispositif de saisie de données, de par la structure de la matrice des zones de saisie.

Les dimensions et la disposition des touches de la matrice de zones de saisie peuvent être préalablement connues par les utilisateurs pour que ceux-ci puissent se repérer sur la matrice de zones de saisie. La matrice de zones de saisie peut également comprendre des motifs embossés ou creusés pour que les utilisateurs puissent se repérer, même sans connaissances préalables des dimensions et des dispositions de la matrice de saisie. On dispose également de profilés formant des fils d'Ariane, au niveau de certaines touches de saisie pour permettre à l'utilisateur de se repérer plus facilement.

Dans au moins un mode de réalisation, la face inférieure de la plaque comprend deux zones de contact indépendantes et chargées électriquement qui permettent au terminal de détecter la présence et la position du dispositif de saisie de données. Le terminal de communication peut donc connaître la position de la matrice de zones de saisie au vu de la position de ces zones de contact chargées électriquement.

On entend par zones de contact indépendantes, des zones de contacts qui ne sont pas reliées électriquement entre elles.

Le terminal de communication comprend une application ou un module spécifique qui permet d'identifier/détecter ces zones de contact électriquement chargées et donc de connaître la position du dispositif de saisie par rapport à l'écran.

De cette manière, lorsque l'utilisateur saisit des informations (par exemple un code PIN) à l'aide du dispositif de saisie, le terminal est en mesure de reconnaitre les caractères saisis (quelles que soient la position et l'orientation du dispositif) et ce sans même avoir besoin d'afficher le clavier sur l'écran.

Comme décrit précédemment en relation avec l'art antérieur, selon les différentes sensibilités des dalles tactiles et les logiciels d'auto-étalonnage mis en œuvre, les zones de contact peuvent ne pas être détectées ou engendrent des interférences et ne sont pas reconnues comme constituant des points de contact d'une grille de saisie de données apposée sur la dalle tactile. Par conséquent, il existe un fort risque pour que la grille de saisie et/ou que les appuis sur la dalle tactile par l'utilisateur ne soient pas détectés correctement par certains terminaux.

Plus précisément, ce risque est dû au fait que, pour certains types de terminaux, les charges électriques de l'écran qui sont emmagasinées au niveau des points de contact ne sont pas évacuées vers l'extérieur de l'écran (ce qui est effectué via l'utilisateur dans une situation normale de contact sur la dalle tactile, notamment). Cela est comparable/analogue à la situation dans laquelle une goutte d'eau tombe sur une dalle tactile. En effet, dans le cas d'une goutte d'eau, les charges électriques concentrées au niveau de la goutte d'eau ne sont pas évacuées et cela crée des interférences de détection d'appui sur la dalle tactile. Il en est de même avec les points de contact de la grille de saisie pour certains types de terminaux.

Ces interférences peuvent être filtrées de manière logicielle, mais cela est complexe et coûteux à mettre en œuvre. D'autant plus que chaque type de terminal doit être modifié/adapté pour mettre en œuvre ce type de filtrage, ce qui n'est pas satisfaisant.

Afin de remédier à cet inconvénient majeur, la solution de la technique proposée prévoit, dans au moins un mode de réalisation, que les deux zones de contact indépendantes sont reliées séparément électriquement à des moyens d'évacuation additionnels (en plus des moyens déjà présents), vers l'extérieur de la dalle tactile du terminal ou dans l'idéal, vers la masse du terminal, des charges électriques concentrées au niveau des pastilles de contact lorsque le dispositif de saisie de données est apposé et maintenu sur la dalle tactile.

On considère ici que les moyens d'évacuation des charges électriques sont des moyens additionnels puisque, en plus des charges électriques classiquement évacuées lors de la saisie des données par l'utilisateur, via la matrice de saisie du dispositif notamment, les moyens additionnels d'évacuation permettent d'évacuer les charges électriques concentrées au niveau des pastilles de contact lorsque l'utilisateur maintien le dispositif de saisie de données sur la dalle tactile : ils interviennent donc en plus des moyens déjà présents.

De cette manière, les zones de contact chargées électriquement peuvent être détectées par tous types de terminaux. Les charges électriques concentrées au niveau de ces zones lorsque le dispositif de saisie de données est apposé sur l'écran étant évacuées vers l'extérieur de la dalle tactile, via l'utilisateur par exemple, les zones de contact ne créent plus d'interférence et sont efficacement détectées par le terminal.

Les avantages fournis par le dispositif de saisie de la présente technique sont nombreux. En premier lieu, il permet aux personnes malvoyantes d'effectuer seules des saisies de données sur des écrans tactiles. Il permet aussi d'effectuer des saisies pour des personnes ne présentant pas de handicap particulier, mais qui ne se sentent pas à l'aise vis-à-vis des écrans tactiles. Il permet également d'élever le niveau de sécurité de saisie des données (notamment confidentielles) sur les écrans tactiles en ne nécessitant pas l'affichage d'un clavier virtuel : il permet ainsi d'éviter que des personnes mal intentionnées ne repèrent les données saisies. Pour finir, il permet également une détection optimale du dispositif de saisie de données, et cela quels que soient la sensibilité et les logiciels d'auto-étalonnage de la dalle tactile.

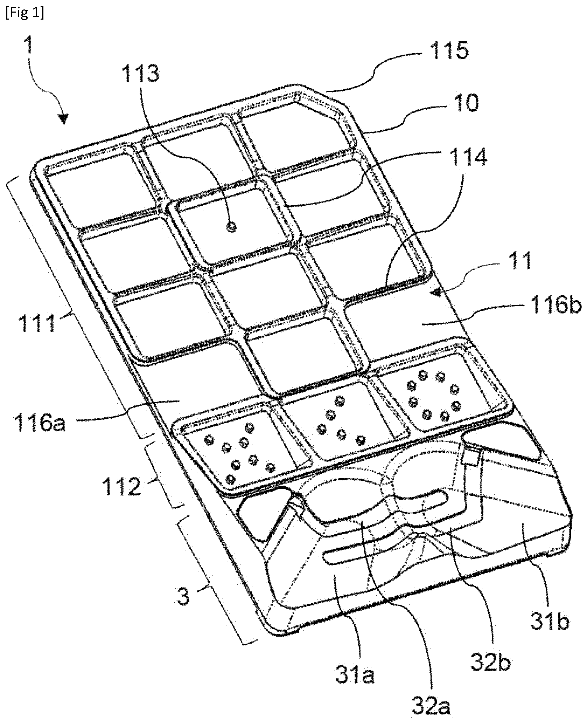

On illustre par la suite deux modes de réalisation de la technique proposée ainsi que des variantes de ces modes de réalisation, traités à titre de simples exemples illustratifs et non limitatifs, à l'appui des figures 1 à 23.

### Description d'un premier mode de réalisation

On décrit en relation avec les figures 1 **à** 7**,** un premier mode de réalisation, ainsi qu'une variante, du dispositif de saisie de données selon la présente technique.

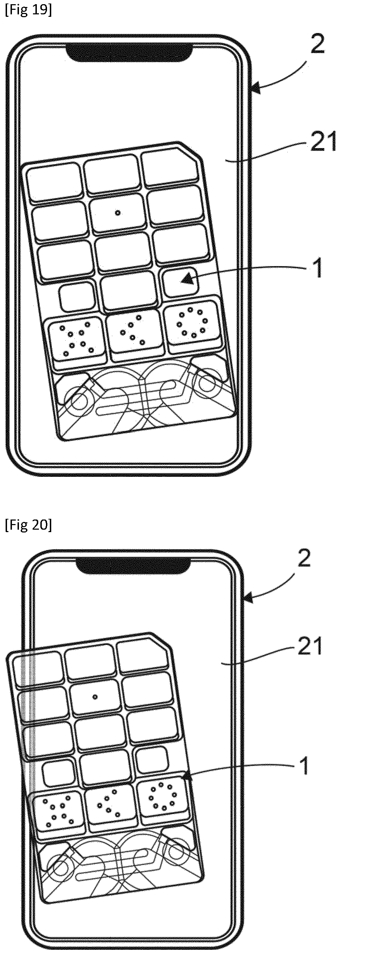

Comme illustré sur la **figure 1** notamment, le dispositif 1 de saisie de données comprend une plaque 10, sensiblement parallélépipédique, destinée à être apposée sur une dalle tactile 21 d'un terminal de communication 2 (illustré sur les figures 19 à 22).

La plaque 10 est globalement rectangulaire et est constituée d'une matière isolante électriquement afin de ne pas émettre une capacité parasite difficilement contrôlable. De préférence, la plaque 10 est constituée d'un matériau non conducteur, rigide et transparent. Par exemple, la plaque 10 est fabriqué dans un matériau plastique, comme le polycarbonate, ou en verre.

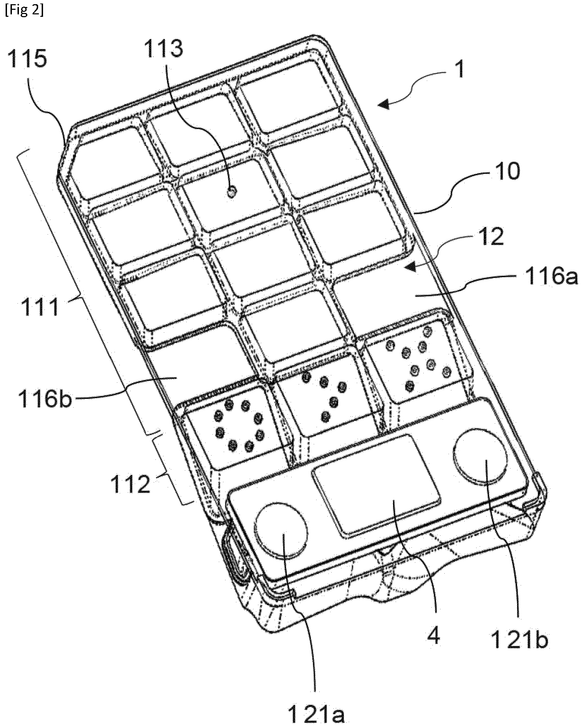

La plaque 10 comprend une face supérieure 11 (illustrée sur la figure 1) et une face inférieure 12 (illustrée sur la figure 2). La surface supérieure 11 comprend une matrice de zones de saisie formant clavier et se présentant au format portrait. La matrice de zones de saisie comprend un ensemble de touches de saisie rectangulaires regroupées dans un premier sous-ensemble 111 et un deuxième sous-ensemble 112. L'ensemble de touches de saisie est représentatif d'un clavier de saisie d'un code confidentiel sur un terminal de paiement, par exemple.

Le premier sous-ensemble 111 comprend dix touches numériques représentant les chiffres 1, 2, 3, 4, 5, 6, 7, 8, 9 et 0. Les touches numériques sont globalement planes et ne comprennent aucune indication spécifique quant aux chiffres que les touches numériques représentent. Cela permet d'éviter qu'une personne malveillante surveille les touches qui sont utilisées pour la saisie.

Comme illustré, la touche du chiffre cinq comprend, en son centre, un téton de repérage 113. Les touches des chiffres 1 à 4 et 6 à 9 sont positionnées autour de la touche du chiffre 5, comme à l'accoutumée. Le fait de repérer la touche du chiffre 5 permet à l'utilisateur malvoyant de visualiser mentalement et rapidement les positions des autres touches numériques.

Le deuxième sous-ensemble 112 comprend trois touches fonctionnelles : une touche d'annulation 112-1, une touche d'effacement (correction) 112-2 et une touche de validation 112-3. Les touches fonctionnelles comprennent des motifs embossés ou creusés indiquant les fonctions des touches (comme décrit plus en détail par la suite). Par exemple, le motif « X » représente la fonction d'annulation, le motif « < » représente la fonction d'effacement, et le motif « O » représente la fonction de validation.

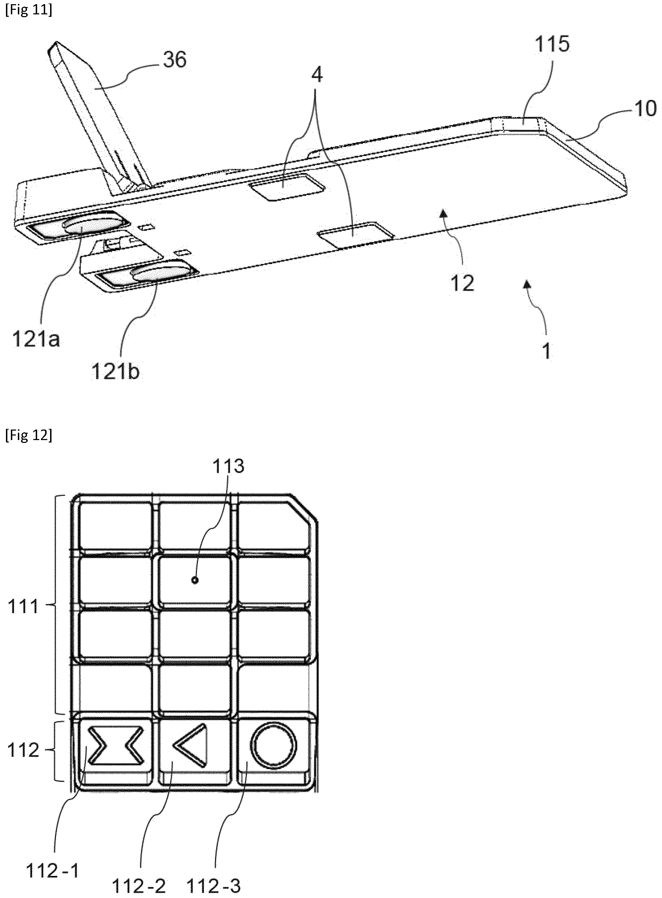

Les zones de saisie des premier 111 et deuxième 112 sous-ensembles de touches présentent une épaisseur configurée pour permettre une détection d'un doigt par la dalle tactile 21 quand le dispositif 1 est apposé sur la dalle tactile (comme décrit plus en détail par la suite en relation avec les figures 12 à 15). Par exemple, le fond des touches présente une épaisseur comprise entre 0,1 et 0,3mm lorsque la plaque 10 est fabriquée en polycarbonate.

Dans le cas d'une plaque 10 fabriquée dans un matériau présentant une permittivité plus élevée, par exemple le verre, l'épaisseur de la plaque peut être augmenté jusqu'à 0,4mm, par exemple.

Plus précisément, dans le plan de la face supérieure 11 de la plaque 10, les dix touches numériques du premier sous-ensemble 111 sont disposées sur quatre lignes et trois colonnes. Elles sont également disposées au-dessus des trois touches fonctionnelles 112-1 à 112-3 du deuxième sous-ensemble 112 de touches, elles-mêmes disposées sur une ligne.

Les angles inférieurs gauche 116a et droite 116b (situés sur la quatrième ligne donc) du premier sous-ensemble 111 de touches (situées sur la quatrième ligne donc) ne comportent aucune touche. Ces angles 116a, 116b sont situés de part et d'autre de la touche 0 et servent de repère pour un utilisateur malvoyant.

Les touches de la matrice de zones de saisie sont séparées les unes des autres par une grille de profilés 114, de hauteurs et de formes prédéterminées. Les formes des profilés 114 de la grille de profilés sont adaptées de sorte à former une pluralité de repères de positionnement des touches du clavier.

Plus particulièrement, les profilés 114 forment un ou plusieurs fils d'Ariane, qui permettent à un utilisateur malvoyant de repérer l'emplacement des touches. Par exemple, les profilés 114 forment un premier fil d'Ariane périphérique, sur tout le pourtour du dispositif 1 de saisie, permettant de délimiter le volume externe du dispositif 1 de saisie. Les profilés 114 peuvent également former un deuxième et un troisième fil d'Ariane délimitant respectivement les premier 111 et deuxième 112 sous-ensembles de touches de saisie. Pour finir, les profilés 114 peuvent également former un fil d'Ariane autour de la touche 5.

Ainsi, une personne malvoyante est en mesure de repérer aisément et finement l'emplacement des touches du clavier sur le dispositif 1 en effleurant ou en touchant les profilés 114 : on définit ainsi l'équivalent de plusieurs fils d'Ariane, qui lorsqu'ils sont suivis par la personne malvoyante, en utilisant un ou plusieurs doigts, permettent de suivre la grille de touches et d'identifier l'endroit où se trouve telle ou telle touche de manière simple et intuitive.

De plus, dans une implémentation particulière, un coin 115 du dispositif 1 de saisie de données (par exemple en haut à droite) est biseauté et permet à l'utilisateur d'orienter, sans confusion possible, le dispositif 1 de saisie de données. Ce coin 115 biseauté sert, par convention, à orienter le dispositif 1 de saisie de données et est donc reconnaissable par toute personne malvoyante.

Comme illustré sur la **figure 2****,** la face inférieure 12 du dispositif 1 de saisie de données comprend, dans cet exemple, deux zones ou pastilles (« contact pad » en anglais) de contact 121a, 121b sensiblement planes et conductrices électriquement.

Les pastilles de contact 121a, 121b sont indépendantes, c'est-à-dire isolées électriquement l'une par rapport à l'autre. En d'autres termes, et étant donné que la plaque 10 est fabriquée dans un matériau non conducteur, les pastilles de contact 121a, 121b ne sont pas reliées électriquement entre elles tant que l'utilisateur ne maintient pas le dispositif 1 de saisie de données par les moyens additionnels d'évacuation 3, comme décrit par la suite. De cette manière, un transfert de charges électriques d'une pastille de contact vers l'autre est empêché de sorte à éviter une détection aléatoire du dispositif 1 de saisie de données par le terminal 2.

Dans cet exemple, les deux pastilles de contact 121a et 121b sont très souples et planes, de façon à maximiser leur surface en contact avec la dalle tactile 21. Elles possèdent ici la forme d'un disque dont le diamètre est compris entre 8 et 10mm, de sorte à ce que les pastilles de contact 121a, 121b présentent une surface sensiblement identique à celle d'un doigt d'un utilisateur lorsque le dispositif de saisie de données est apposé sur la dalle tactile 21 du terminal 2.

Les deux pastilles de contact 121a et 121b sont par exemple constituées de silicone conducteur, c'est-à-dire un silicone chargé en particules de carbone, dont la dureté est comprise entre 40 et 80 Shores A. D'autres techniques ou matériaux peuvent être utilisés pour réaliser les pastilles de contact, comme par exemple : des pastilles fabriquées en métal ou tout autre matériaux conducteur, des dessins/motifs réalisés avec des encres conductrices (directement sur la face inférieure de la plaque, ou sur un film lui-même ensuite reporté sur la face inférieure de la plaque), etc.

L'entraxe entre les pastilles de contact 121a ,121b est déterminé et connu du contrôleur du terminal 2, qui peut ainsi, après avoir détecté les deux pastilles de contact, détecter que le dispositif 1 de saisie de données a été apposé sur la dalle tactile 21. Le contrôleur peut également en déduire la position et l'orientation modulo 180° du dispositif 1 de saisie de donnée sur la dalle tactile 21.

De cette manière, le dispositif 1 de saisie de données comprend, intrinsèquement, une signature. Cette signature est constituée des deux points de contact avec la dalle tactile 21 du terminal. Lorsque le dispositif 1 de saisie de données est posé sur une surface tactile, et plus particulièrement une surface tactile capacitive, la couche de la surface tactile qui accumule les charges électriques transmet certaines de ces charges électriques aux deux pastilles de contact 121a, 121b.

Le terminal 2 est alors en mesure de détecter que les pastilles de contact 121a, 121b indépendantes correspondent à une géométrie particulière représentative du dispositif 1 de saisie de données.

Le terminal 2 peut donc connaître la position de la matrice de zones de saisie par rapport à la position de la zone de contact chargée électriquement, et également les dimensions et les dispositions de la matrice de zones de saisie (lorsqu'il est envisagé de disposer de plusieurs types de matrices différentes, tant en taille qu'en fonctionnalité ou en nombre de touches). Le terminal 2 peut alors activer un mode de saisie de données correspondant à la saisie par l'intermédiaire du dispositif 1 de saisie de données.

Plus particulièrement, selon la technique proposée, la face inférieure 12 de la plaque 10 comprend par exemple deux zones de contact chargées électriquement : une première pastille de contact 121a est positionnée dans le coin inférieur gauche de la face inférieure 12 de la plaque 10 et une deuxième pastille de contact 121b est positionnée dans le coin inférieur droit de la face inférieure 12 de la plaque 10.

De préférence, les pastilles de contact 121a, 121b sont situées à environ 9 mm du bord inférieur et des bords latéraux de la face inférieure 12 de la plaque 10. Cette distance entre les bords de la plaque 10 et les pastilles de contact 121a, 121b permet d'éviter que le terminal 2 perde la détection/position du dispositif de saisie de données 1 sur la dalle tactile 21, en cas de contact parasite/involontaire du doigt d'un utilisateur à proximité du bord de la plaque 10.

En effet, si l'utilisateur touche involontairement la dalle tactile 21 à proximité du bord de la plaque 10 et que les pastilles de contact 121a, 121b sont disposées trop proches des bords, il existe un risque que le terminal 2 assimile le doigt et la pastille de contact à une unique forme. En d'autres termes, il existe un risque pour que le terminal 2 fusionne ces deux points de contact sur la dalle tactile 21, ce qui entrainerait une perte de la détection du dispositif 1 de saisie de données.

Comme déjà indiqué, et de manière connue, le terminal 2 de communication comprend une application ou un module spécifique qui permet d'identifier ces pastilles de contact 121a, 121b et donc de connaître la position et l'orientation modulo 180° du dispositif 1de saisie de données par rapport à l'écran.

Selon la technique proposée, le dispositif 1 de saisie de données comprend des moyens d'évacuation additionnels 3 des charges électriques vers l'extérieur de la dalle tactile 21 lorsque le dispositif 1 de saisie de données est apposé sur cette dernière.

Comme illustré sur la figure 1, les moyens d'évacuation additionnels 3 sont intégrés à la plaque 10 et sont situés sur la face supérieure 11 de la plaque 10, en dessous du deuxième sous-ensemble 112 de touches du clavier.

Dans ce mode de réalisation, les moyens d'évacuation additionnels 3 comprennent une première et une deuxième surfaces de maintien se présentant respectivement sous la forme d'une empreinte de pouce gauche 31a et d'une empreinte de pouce droit 31b. De cette manière, le dispositif 1 de saisie de données est compatible avec un utilisateur droitier ou gaucher. Les empreintes 31a, 31b sont intégrées dans la plaque 10, c'est-à-dire qu'elles sont fabriquées dans le même matériau (non conducteur) que la plaque 10.

Les empreintes de pouce 31a, 31b sont symétriques. De plus, elles sont légèrement orientées vers le milieu/centre de la plaque 10 et inclinées en direction de la dalle tactile 21 de sorte à contraindre l'appui de l'utilisateur et favoriser un maintien optimal du dispositif 1 de saisie de données sur la dalle tactile 21.

Dans cet exemple, les empreintes 31a, 31b sont chacune disposées avec un angle de ±45° par rapport à l'axe longitudinal de la plaque 10. Les empreintes sont également inclinées d'environ 6° vers l'intérieur de la plaque 10.

Un utilisateur malvoyant souhaitant saisir un code via le dispositif 1 de saisie de données peut donc maintenir ce dernier en posant l'un de ses pouces sur une surface de maintien correspondante. Notamment, lorsque le terminal se présente sous la forme d'un smartphone, l'utilisateur peut tenir son smartphone tout en pinçant le dispositif 1 de saisie de données contre l'écran du smartphone avec son pouce.

La prise en main et l'identification de la surface de maintien 31a, 31b pour l'utilisateur malvoyant sont ainsi facilitées. Ces surfaces de maintien 31a, 31b facilitent également le maintien du dispositif 1 de saisie sur la dalle tactile. De plus, ces empreintes 31a, 31b différentes jouent un rôle de détrompeur et permettent de disposer correctement (c'est-à-dire dans le bon sens avec la face inférieure 12 vers la dalle tactile) le dispositif 1 de saisie sur la dalle tactile 21.

La mise en œuvre de telles empreintes 31a, 31b pour maintenir le dispositif 1 de saisie de données est particulièrement adaptée lorsque le dispositif 1 de saisie de données est utilisé sur un terminal nomade/mobile, tel qu'un smartphone ou une tablette tactile, par exemple.

En outre, les moyens d'évacuation additionnels 3 comprennent des languettes, ou lames, conductrices 32 qui relient électriquement chacune des pastilles de contact 121a, 121b aux surfaces maintien 31a, 31b.

Les languettes conductrices 32 sont fabriquées dans un matériau conducteur, de préférence inoxydable, afin d'assurer une fiabilité optimale. Par exemple, les languettes conductrices 32 sont fabriquées en cuivre, en bronze, en acier inoxydable, etc.

Dans cet exemple, les languettes conductrices 32 sont réalisées sous la forme de pistes tracées directement dans les empreintes 31a, 31b de la plaque 10. Les languettes conductrices 32a, 32b sont chacune reliées électriquement à une pastille de contact 121a, 121b via une résistance 5 (non illustrée dans ce mode de réalisation).

Cette résistance électrique 5 permet au circuit de se rapprocher du modèle corps humain (« Human Body Model » en anglais) qui est le modèle le plus couramment utilisé pour caractériser la sensibilité d'un appareil électronique aux dommages causés par les décharges électrostatiques. Ainsi, la résistance électrique 5 reliant une languette conductrice 32 avec une pastille de contact 21 présente une valeur inférieure ou égale à 1,5 kΩ, et préférentiellement une valeur de 1,5 kΩ.

Dans ce mode de réalisation, c'est l'utilisateur qui permet de connecter le dispositif 1 de saisie de données à la masse pour décharger les charges électriques de la dalle tactile 21 concentrées au niveau des pastilles de contacts 121a, 121b. Ainsi, les charges électriques de la dalle tactile 21 concentrées au niveau des pastilles de contacts 121a, 121b sont transportées jusqu'à la masse en passant par les résistances électriques 5, les languettes conductrices 32a et 32b et le corps de l'utilisateur.

L'évacuation des charges électriques n'intervient qu'à partir du moment où l'utilisateur maintient le dispositif 1 de saisie de données via les moyens d'évacuation additionnels 3, et uniquement tant que le dispositif 1 de saisie de données est maintenu. Dans cet exemple, l'évacuation des charges débute quand un doigt de l'utilisateur entre en contact avec les languettes conductrices 32a, 32b et se prolonge tant que le doigt de l'utilisateur reste en contact avec ces dernières.

On comprend bien évidemment que l'évacuation des charges électriques via les moyens d'évacuation additionnels 3 s'effectue en plus des charges électriques classiquement évacuées au niveau du doigt de l'utilisateur utilisé pour effectuer une saisie de données via le dispositif de saisie de données de l'invention.

Ces moyens d'évacuation 3 additionnels permettent ainsi une détection efficace des deux points de contact du dispositif 1 de saisie lorsqu'il est posé et maintenu sur la dalle tactile 21, quelle que soit la sensibilité de la dalle tactile et quel que soit le programme installé sur le terminal. Ainsi, la présente technique offre une solution compatible avec tous les types de terminaux.

Dans cet exemple, chaque pastille de contact 121a, 121b est reliée électriquement aux deux surfaces de maintien 31a et 31b via une languette conductrice 32a, 32b. De la même façon, chaque surface de maintien 31a, 31b est reliée aux deux pastilles de contact 121a, 121b respectivement via une languette conductrice 32.

Comme illustré sur la figure 1 notamment, une première languette conductrice 32a relie électriquement la première pastille de contact 121b aux deux surfaces de maintien 31a, 31b. De façon similaire, une deuxième languette conductrice 32b relie électriquement la deuxième pastille de contact 121a aux deux surfaces de maintien 31a, 31b. Les languettes conductrices 32a, 32b s'étendent donc chacune d'une pastille de contact 121a, 121b et à travers des deux surfaces de maintien 31a, 31b.

Préférentiellement, les languettes conductrices 32a, 32b s'étendent de manière affleurante et à travers chacune des surfaces de maintien 31a, 31b de sorte que le pouce d'un utilisateur posé sur une des surfaces de maintien 31a, 31b soit simultanément en contact électrique avec les deux languettes conductrices 32a, 32b. Ainsi, le pouce de l'utilisateur est en contact électrique avec les deux pastilles de contact 121a, 121b afin d'évacuer les charges électriques de la dalle tactile 21 concentrées au niveau des deux pastilles de contact 121a, 121b.

A noter que les languettes conductrices 32a, 32b ne sont pas reliées électriquement entre elles et sont indépendantes. Comme illustré, les languettes conductrices 32a, 32b sont éloignées l'une de l'autre afin de limiter les capacités parasites. Par exemple, les languettes conductrices 32a, 32b présentent une distance d'au moins 2mm entre elles.

De plus, les languettes conductrices 32a, 32b doivent être suffisamment distantes de la dalle tactile 21, aussi afin d'éviter les capacités parasites. Par exemple, les languettes conductrices 32a, 32b sont distantes d'au moins 2mm de la dalle tactile 21 lorsque le dispositif 1 de saisie de données est apposée sur le terminal 2.

La distance entre les languettes conductrices 32a, 32b et la distance entre la dalle tactile 21 et les languettes conductrices 32a, 32b peuvent être modifiées en fonction de la largeur des languettes conductrices 32a, 32b. Par exemple, si on diminue la largeur des languettes conductrices 32a, 32b, on peut réduire la distance entre les languettes conductrices 32a, 32b et la dalle tactile 21. Dans cet exemple, les languettes conductrices 32a, 32b présentent une largeur d'environ 2mm.

De même, les pastilles de contact 121a, 121b ne sont pas reliées électriquement entre elles (ni par une résistance, ni par une capacité, ni par un autre composant électrique) et sont indépendantes. En effet, aucune connexion électrique ne doit être réalisée entre les pastilles de contact 121a, 121b afin d'assurer un fonctionnement homogène du dispositif 1 de saisie de données sur tous types de terminaux.

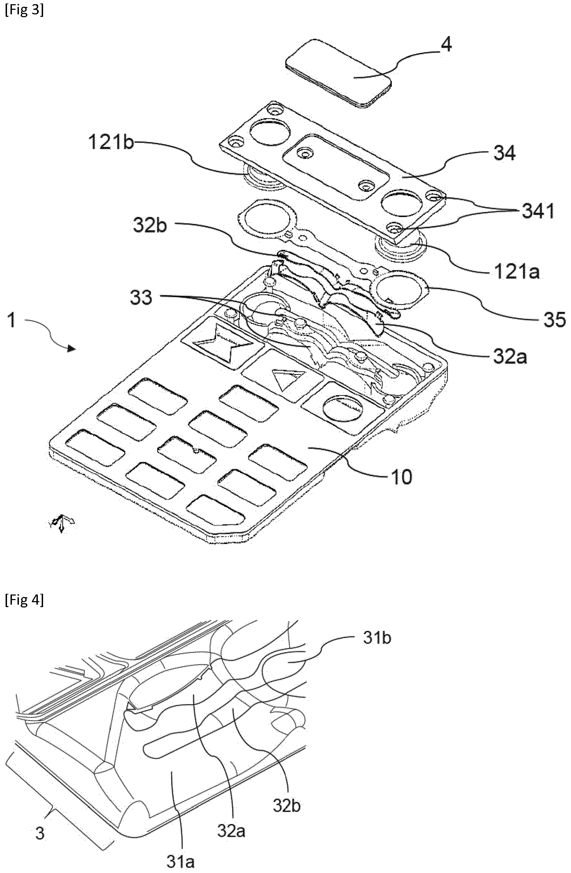

La **figure 3** illustre une vue éclatée d'une variante du dispositif 1 de saisie de données montrant en détail et du dessous les éléments constituant les moyens d'évacuation additionnels 3 des charges électriques.

Dans cette variante, les languettes conductrices 32a, 32b ne sont pas tracées sur les empreintes 31a, 31b. Les languettes conductrices 32a, 32b sont ici des éléments indépendants rapportés dans les empreintes 31a ,31b et implémentés en contact direct avec les pastilles de contact 121a, 121b.

Comme illustré, la plaque 10 comprend, au niveau des empreintes 31a, 31b, des ouvertures 33 de réception des languettes conductrices 32a, 32b. Comme indiqué précédemment, ces ouvertures 33 sont configurées pour que les languettes conductrices 32a, 32b soient affleurantes avec la surface des empreintes 31a, 31b venant en contact avec l'utilisateur.

Un élément de liaison intermédiaire 35, se présentant dans cet exemple sous la forme d'un circuit flexible (dit « Flexible Printed Circuit » - FPC , en anglais) est situé entre les languettes conductrices 32a, 32b et les pastilles de contact 121a, 121b afin d'établir le contact électrique entre les languettes conductrices 32a et 32b et les pastilles de contact 121a, 121b.

De préférence, l'élément de liaison intermédiaire 35 est transparent, tout comme la plaque 10, de sorte à ce que l'intégralité de produit soit transparent afin de pouvoir aisément contrôler de manière visuelle qu'il n'y a pas d'éléments électroniques espions/frauduleux à l'intérieur du dispositif 1 de saisie de données.

Dans cet exemple, des résistance électriques (non représentées) sont soudées sur l'élément de liaison intermédiaire 35 afin de pouvoir ajuster la résistance de l'ensemble.

La valeur de ces résistances est fonction des matériaux choisis pour fabriquer les pastilles de contact 121a, 121b et les languettes conductrices 32a, 32b. La valeur de ces résistances est située entre 0 et 1,5kΩ.

Un couvercle 34, ou embase de support, fabriqué dans un matériau non conducteur est prévu afin de couvrir et maintenir les languettes conductrices 32a, 32b, l'élément de liaison 35 et les pastilles de contact 121a, 121b. Des ouvertures 341 de passage des pastilles de contact 121a, 121b sont prévues à travers le couvercle 34 de sorte à permettre le contact des pastilles de contact 121a, 121b avec la dalle tactile lorsque le dispositif 1 de saisie de données est apposé sur la dalle tactile 21 du terminal 2.

Le couvercle 34 est fixé par des moyens de solidarisation non conducteurs sur la plaque 10. Dans cet exemple, un bouterollage à chaud est mis en œuvre pour solidariser le couvercle 34 avec des montants 101 de la plaque 10 au niveau de six points d'attache 341. D'autres moyens de solidarisation pourraient être envisagés, comme par exemple des clips, un collage ou une soudure ultra-sons.

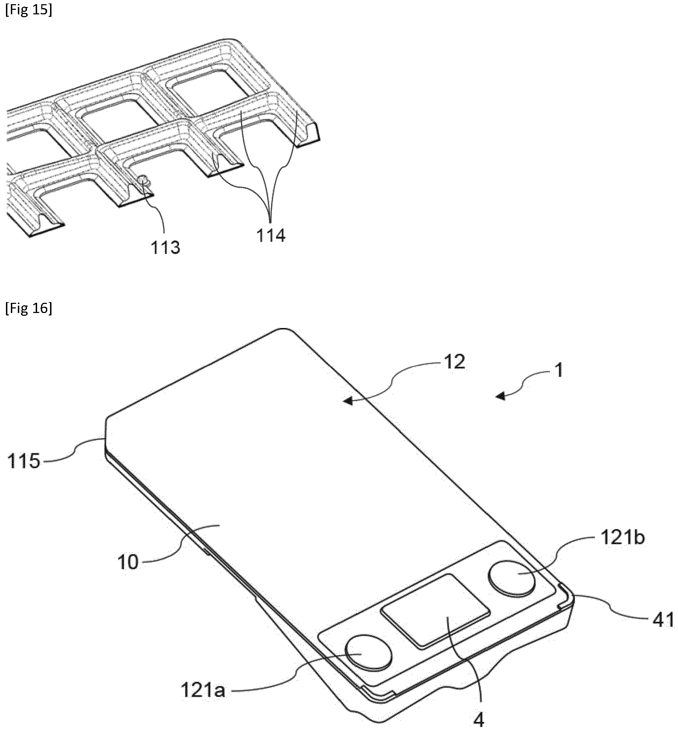

Un coussinet 4 est solidaire de la face inférieure du couvercle, c'est-à-dire situé sur la surface inférieure 12 de la plaque 10. Ce coussinet 4, décrit plus en détail en relation avec les figures 16 à 18, est fabriqué dans un matériau souple et adhérent et permet de maintenir en position le dispositif 1 de saisie de données lorsque ce dernier est apposé sur la dalle tactile 21 du terminal 2.

La **figure 4** illustre en détail la première empreinte de maintien 31a des moyens d'évacuation additionnels 3. Comme illustré, les deux languettes conductrices 32a, 32b s'étendent, de façon affleurante, au sein de la première empreinte 31a et, de la même façon, au sein de la deuxième empreinte 32a.

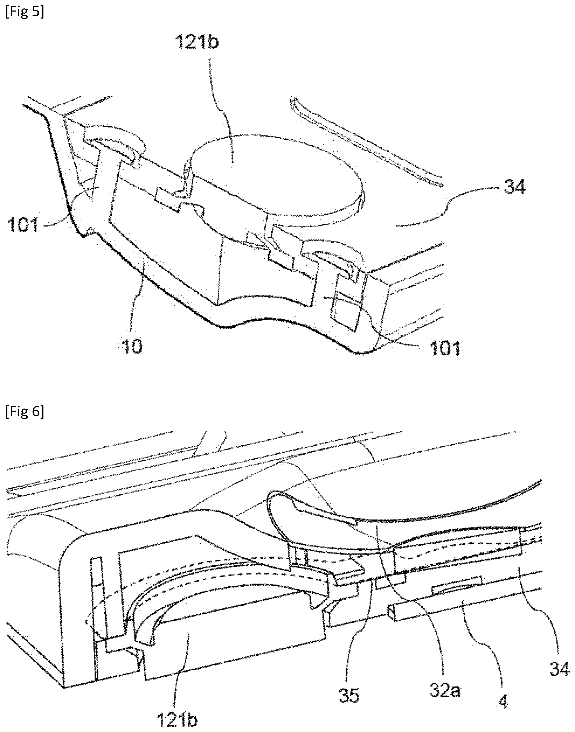

La **figure 5** illustre une vue en coupe montrant la solidarisation d'une pastille de contact 121b avec la plaque 10 du dispositif 1 de saisie de données. Afin d'éviter l'apparition de capacités parasites, l'assemblage des pastilles de contact 121a, 121b avec la plaque 10 est effectué sans élément métallique.

Dans l'exemple illustré, la pastille de contact 121b est clipée/clipsée sur le couvercle de support 34. D'autres techniques d'assemblage peuvent être mises en œuvre, comme le thermocollage ou le bouterollage à chaud, par exemple. De préférence, les assemblages de la pastille de contact 121b sur le couvercle de support 34 et du couvercle de support 34 sur la plaque 10 ne sont pas démontables.

La **figure 6** illustre une vue en coupe montrant l'assemblage des moyens d'évacuation additionnels 3 avec la plaque 10. Comme indiqué précédemment, la pastille de contact 121b est clipée/clipsée sur le couvercle de support 34. La languette conductrice 32a est reçue dans une ouverture 33 de la plaque 10 et est maintenue au sein de cette ouverture par l'élément de liaison intermédiaire 35.

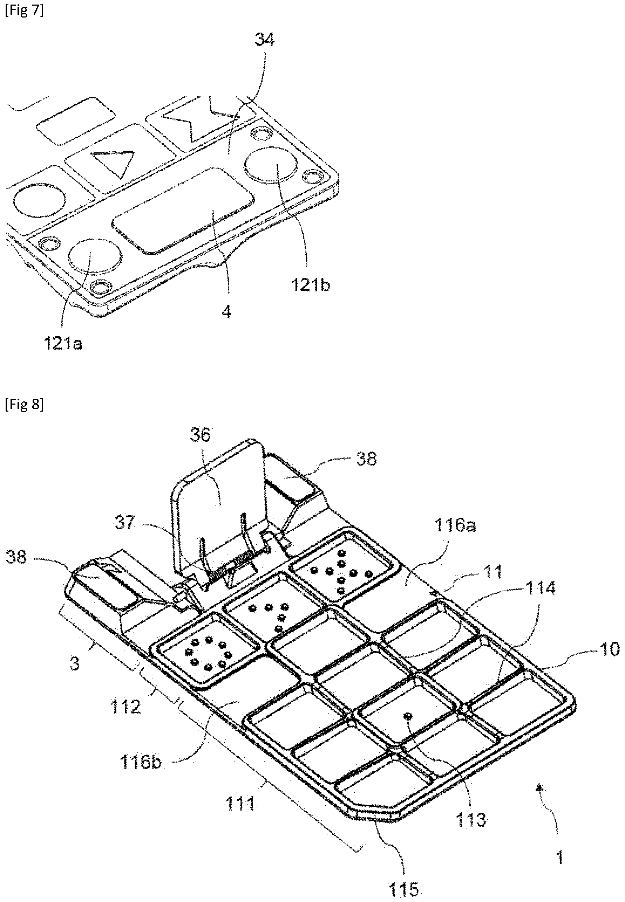

La **figure 7** est une vue de dessous montrant partiellement le dispositif 1 de saisie de données. Plus précisément, cette figure montre la face inférieure 12 de la plaque 10, au niveau des moyens d'évacuation additionnels 3.

Le couvercle de support 34 présente, dans cet exemple, un coussinet 4 situé entre les deux pastilles de contact 121a, 121b. Ce coussinet 4, fabriqué dans un matériau souple et présentant un fort coefficient de frottement, permet d'empêcher que le dispositif 1 de saisie de données ne se déplace lors de son utilisation, c'est-à-dire lorsqu'il est apposé et maintenu sur la dalle tactile 21 du terminal 2.

Dans cet exemple, le coussinet 4 est de forme rectangulaire et occupe en grande partie l'espace laissé libre entre les deux pastilles de contact 121a, 121b.

Bien que les pastilles de contact 121a, 121b et le coussinet 4 soient alignés, les pastilles de contact 121a, 121b, qui sont fabriquées dans un matériau relativement souple, s'effacent afin d'éviter une situation hyperstatique. Il est à noter que les pastilles de contact 121a, 121b ainsi que le coussinet 4 doivent être en contact avec la dalle tactile 21 du terminal 2 afin d'assurer un fonctionnement optimal du dispositif 1 de saisie de données.

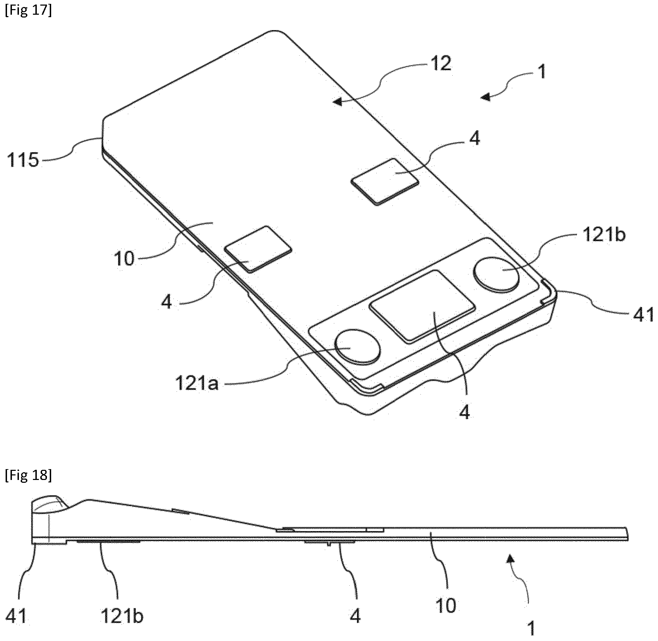

D'autres formes et dimensions de coussinet 4 peuvent être envisagées. De la même manière, plusieurs coussinets 4 peuvent être mis en œuvre et être situés différemment sur la surface inférieure 12 de la plaque 10, comme détaillé en référence avec les figures 16 et 17 notamment.

### Description d'un deuxième mode de réalisation

On décrit en relation avec les figures 8à 11**,** un deuxième mode de réalisation du dispositif 1 de saisie de données selon la présente technique.

Dans ce deuxième mode de réalisation, le dispositif 1 de saisie de données est sensiblement identique, dans sa structure et son fonctionnement. Ce sont les moyens d'évacuation additionnels 3 et de maintien du dispositif 1 de saisie de données qui diffèrent.

Les éléments identiques au premier mode de réalisation présentent les mêmes références numériques sur les figures. Les caractéristiques techniques de ces éléments étant identiques au premier mode de réalisation, ces éléments ne sont donc pas décrits de nouveau.

Comme illustré sur la **figure 8****,** les moyens d'évacuation additionnels 3 comprennent un levier 36, solidaire de la plaque 10, qui sert de moyen de préhension à l'utilisateur et qui est relié électriquement aux pastilles de contact 121a, 121b indépendantes. Plus précisément, les deux faces du levier 36 sont reliées électriquement en permanence avec les pastilles de contact 121a, 121b, via une résistance de 1.5 kΩ.

Ce levier 36 est monté pivotant/mobile en rotation par rapport à la plaque 10 de sorte à permettre une utilisation aisée du dispositif 1 de saisie de données aussi bien sur un terminal 2 disposé horizontalement (c'est-à-dire à plat, comme par exemple un terminal de paiement électronique posé sur une table ou un comptoir) ou disposé de manière inclinée, voire verticale (c'est-à-dire debout, comme par exemple un distributeur de billets ou une borne de paiement autonome).

Sur la figure 8, le levier 36 est représenté en position relevée, également appelée position d'utilisation. Cette position relevée du levier 36 permet de faciliter l'utilisation du dispositif 1 de saisie de données lorsqu'il est apposé sur un terminal 2 disposé de manière inclinée ou verticale. Dans la position relevée, l'utilisateur peut maintenir le dispositif 1 de saisie de données en tenant/pinçant le levier 36 avec deux doigts (par exemple son pouce et son index).

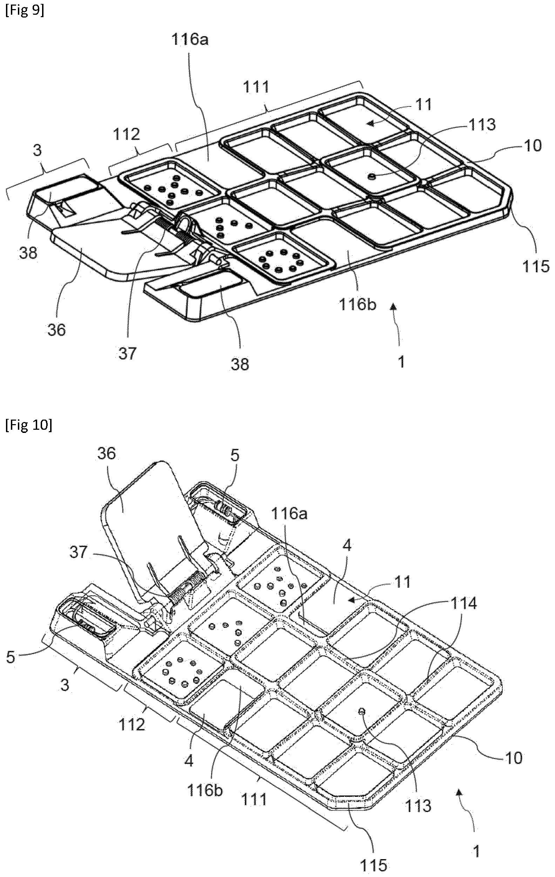

Sur la **figure 9****,** le levier 36 est représenté en position abaissée, également appelée position de non utilisation ou position de stockage. Cette position abaissée du levier 36 permet de faciliter le stockage du dispositif 1 de saisie de donnée lorsque ce dernier n'est pas utilisé, par exemple dans une poche ou dans un sac de l'utilisateur.

Le levier 36 peut également être utilisé selon d'autres positions d'inclinaison, dites positions intermédiaires, dans lesquelles le levier 36 est incliné selon un angle permettant au levier 36 de s'étendre entre les deux positions extrêmes, c'est-à-dire entre les positions relevée et abaissée illustrées sur les figures 8 et 9.

Un ressort de rappel 37 est solidaire du levier 36 et agit pour ramener le levier 36 vers la position abaissée. Ainsi, le ressort de rappel 37 permet, lorsque l'utilisateur tient le levier 36 pour utiliser le dispositif 1 de saisie de données sur un terminal 2, de plaquer la plaque 10 contre la dalle tactile21. La préhension du levier 36 entre les deux doigts de l'utilisateur et le maintien du dispositif 1 de saisie de données sont ainsi facilités.

Lorsque l'utilisateur souhaite utiliser le dispositif 1 de saisie de données sur un terminal 2 disposé sensiblement horizontalement, il peut, de la même manière, utiliser son pouce et son index pour tenir le levier 36 et ainsi maintenir en position le dispositif 1 de saisie de données. La force de rappel du ressort de rappel 37 permet, lorsque l'utilisateur tient le levier 36, de plaquer de manière optimale la face inférieure 12 de la plaque 10 du dispositif 1 de saisie de données sur la dalle tactile 21 d'un terminal 1. Plus précisément, un plaquage optimal du dispositif 1 de saisie de données assure un positionnement et un contact efficaces des pastilles de contact 121a, 121b et du/des coussinet(s) 4 contre la dalle tactile 21.

La position/inclinaison du levier 36 dépend sensiblement de l'utilisation que l'on fait du dispositif 1 de saisie de données, notamment si le terminal 2 est disposé à hauteur de main, à hauteur de visage, de façon horizontale ou verticale, etc.

La mise en œuvre d'un tel levier 36 est particulièrement adaptée lorsque le dispositif 1 de saisie de données est utilisé sur des dalles tactiles relativement stables, ou lorsque le terminal 2 est disposé sur une table ou monté sur support fixe.

Dans cet exemple, chaque face du levier 36 est reliée électriquement et distinctement à chaque pastille de contact 121a ,121b. Ainsi, qu'importe la position dans laquelle est utilisé le levier 36 (c'est-à-dire relevée ou inclinée selon l'une des positions intermédiaires notamment), l'utilisateur va forcément être en contact avec les deux faces du levier 36 reliées électriquement aux pastilles de contact 121a, 121b de sorte à évacuer les charges électriques de la dalle tactile 21 concentrées au niveau des pastilles de contact 121a, 121b.

Ces moyens d'évacuation additionnels 3 selon ce deuxième mode de réalisation permettent donc également une détection des deux points de contact du dispositif 1 de saisie lorsqu'il est posé sur la dalle tactile 21, quelle que soit la sensibilité de la dalle tactile et quel que soit le programme installé sur le terminal. Ainsi, la présente technique offre une solution compatible avec tous les types de terminaux, selon ce deuxième mode de réalisation également.

Le levier 36 présente une épaisseur suffisamment importante pour éviter le risque de capacité parasite entre les deux faces du levier 36.

La **figure 10** illustre le dispositif 1 de saisie de données de la figure 8 montrant en transparence une partie des moyens d'évacuation additionnels 3. Plus particulièrement, cette figure illustre la mise en œuvre des résistances électriques 5 reliant chaque face du levier 36 aux pastilles de contact 121a, 121b.

Ainsi, la pastille 121a est reliée, via une première résistance électrique 5, à une des surfaces du levier 36. De la même façon, la pastille 121b est reliée, via une deuxième résistance électrique 5, à l'autre face du levier 36.

Quelle que soit la position du levier 36, les pastilles de contact 121a, 121b restent toujours en contact électrique avec le levier 36 de sorte à assurer l'utilisation du dispositif 1 de saisie de données en évacuant vers l'extérieur de la dalle tactile les charges concentrées au niveau de ces pastilles.

Dans cet exemple, des protubérances 38 sont situées de part et d'autre du levier 36 et reçoivent chacune une résistance électrique 5. Ces protubérances 38 permettent également à l'utilisateur de se repérer spatialement et d'appliquer correctement le dispositif 1 de saisie de données sur la dalle tactile 21 du terminal 2.

Dans une variante non illustrée, il est envisageable de prévoir des résistances 5 de plus faibles dimensions de sorte à éviter la mise en œuvre des protubérances 38 sur la plaque 10 de part et d'autre du levier 26.

La figure 10 illustre également, en transparence, la position des coussinets 4 comme décrit ci-dessous.

La **figure 11** montre la mise en œuvre des pastilles contact 121a, 121b et des coussinets 4. Comme illustré, les pastilles de contact 121a, 121b sont disposées sensiblement similairement au premier mode de réalisation, c'est-à-dire à proximité de chacun des coins inférieurs de la surface inférieure 12 de la plaque 10. Pour des raisons identiques au mode de réalisation précédent, les pastilles de contact 121a, 121b sont écartées, par exemple d'une distance de 9mm, des bords de la plaque 10.

Dans cet exemple, il n'y a plus de couvercle 34 puisque c'est le levier 36 qui se situe à cette place. Ainsi, l'unique coussinet 4, qui était situé entre les deux pastilles de contact 121a, 121b dans le premier mode de réalisation, est substitué par deux coussinets 4, de dimensions inférieures, situés sensiblement au milieu de la longueur de la plaque 10 et au niveau des bords latéraux de la plaque 10.

Plus précisément, les coussinets 4 sont sensiblement situés en regard des angles inférieurs gauche 116a et droite 116b du premier sous-ensemble 111 de touches, comme illustré en transparence sur la figure 10. Cette position particulière des deux coussinets 4 sur la face inférieure 12 de la plaque permet d'assurer une adhérence optimale du dispositif de saisie de données, et ce, quel que soit le mode de préhension de l'utilisateur (c'est-à-dire avec le levier 36 en position relevée ou inclinée notamment). En effet, sous l'effet du ressort de rappel 37, le dispositif 1 de saisie de données est plaqué contre la dalle tactile 21 du terminal2, ce qui assure une adhérence optimale des coussinets4.

### Procédé de saisie de données

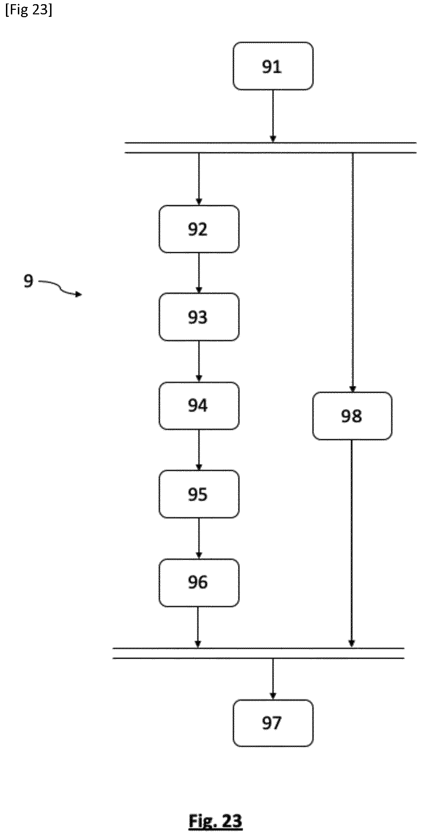

La présente technique se rapporte également à un procédé de saisie de données sur une dalle tactile d'un terminal en utilisant le dispositif 1 de saisie de données pour les personnes malvoyantes décrit ci-dessus. La **figure 23** présente un organigramme de ce procédé.

Un tel procédé 9 comprend :
- une étape de pose 91, sur une dalle tactile 21 du terminal 2, d'un dispositif 1 de saisie de données tel que décrit précédemment ;
- une étape de liaison capacitive 92, s'apparentant à une connexion électrique, entre les pastilles de contact 121a, 121b indépendantes et la dalle tactile 21 du terminal 2 lorsque le dispositif 1 de saisie de données est maintenu, via les moyens d'évacuation additionnels 3, par un utilisateur sur la dalle tactile 21 du terminal,
- une étape de détection 93, par le terminal 2, de la position et de l'orientation du dispositif 1 de saisie de données basée sur une détection des deux pastilles de contact 121a, 121b ;
- une étape de saisie 94, par un utilisateur, de données sur la surface du dispositif 1 de saisie de données ;
- une étape de détection 95, par le terminal 2, des données saisies sur la surface du dispositif 1 de saisie de données basée sur une détection d'au moins un appui d'un doigt de l'utilisateur sur une des zones de saisie du clavier ;
- une étape de validation 96, par un utilisateur, des données saisies ; et
- optionnellement, une étape de retrait 97 du dispositif 1 de saisie de données de la dalle tactile 21 du terminal 2.

Selon la technique proposée, une étape 98 d'évacuation, via les moyens d'évacuation additionnels 3, des charges électriques concentrées au niveau des pastilles de contact 121a,1 21b est effectuée tant que le dispositif 1 de saisie de données est apposé sur la dalle tactile 21 du terminal 2.

De préférence, l'étape 98 d'évacuation des charges électriques concentrées au niveau des pastilles de contact 121a, 121b se réalise vers le corps de l'utilisateur, via les moyens d'évacuation additionnels 3, tant que le dispositif 1 de saisie de données est apposé et maintenu, via les moyens d'évacuation 3, par l'utilisateur sur la dalle tactile 21 du terminal 2.

Cette évacuation des charges électriques concentrées au niveau des pastilles de contact 121a, 121b via les moyens d'évacuation additionnels 3 s'effectue de manière additionnelle à l'évacuation classiques des charges électriques via le dispositif de saisie de données lors de la saisie de données par l'utilisateur.

L'étape d'évacuation 98 des charges électriques concentrées au niveau des pastilles de contact 121a, 121b s'effectue en parallèle, c'est-à-dire simultanément, des étapes de liaison capacitive 92, de détection 93 de la position et de l'orientation du dispositif 1 de saisie de données, de saisie 94 des données par l'utilisateur, de détection 95 des données saisies et de validation 65 des données saisies.

L'évacuation des charges électriques concentrées au niveau des pastilles de contact 121a, 121b permet de supprimer les interférences au niveau de ces points de contact de sorte à favoriser une détection optimale du dispositif 1 de saisie de données par le terminal 2, lorsque le dispositif 1 de saisie de données est apposé sur la dalle tactile 21 pour effectuer une saisie de données.

Lors du retrait 97 du dispositif 1 de saisie de données de sur la dalle tactile 21, la liaison capacitive entre le dispositif 1 de saisie de données et la dalle tactile 21 est rompue. Il n'y a donc plus de charges électriques concentrées au niveau des pastilles de contact 121a, 121b à évacuer.

Comme décrit précédemment, l'évacuation des charges électrique se fait donc à travers le corps de l'utilisateur, lorsque ce dernier entre en contact avec les moyens d'évacuation additionnels 3 qui se présentent soit sous la forme d'empreintes de maintien 31a, 31b, soit d'un levier 36. Plus particulièrement, l'évacuation des charges électriques s'effectue lorsque l'utilisateur maintien le dispositif 1 de saisie de données par le biais des moyens d'évacuation qui, dans ces exemples, sont également des moyens de préhension du dispositif 1 de saisie de données.

En outre, selon la technique proposée, la validation 96 des données saisies par l'utilisateur peut être réalisée de différentes façons.

Une façon de valider les données saisies consiste classiquement à faire un appui sur la touche de validation 112-3 du dispositif 1 de saisie de données. Cette situation est cependant à éviter afin de ne pas rendre plus facile le piratage d'un code confidentiel par une personne malintentionnée. En effet, un observateur pourrait déduire les appuis touches précédant un appui de validation, par déduction et connaissance des emplacements respectifs des différentes touches d'un clavier, et ainsi déduire le code confidentiel *a posteriori.*

Ainsi, afin de compliquer le piratage, la validation peut se faire de manière plus sécurisée.

Par exemple, la validation peut s'effectuer en retirant le dispositif 1 de saisie de données de la dalle tactile 21. Ce retrait du dispositif 1 entraine une détection, par le terminal, de l'absence des pastilles de contact 121a, 121b, ou bien une non détection des pastilles de contact 121a, 121b. Le retrait du dispositif 1 de saisie de données indique donc au terminal 2 que la saisie de données par l'utilisateur est terminée.

Encore une autre façon de valider les données saisies consiste à faire au moins deux contacts/appuis (« double tap » en anglais) rapides/rapprochés sur la dalle tactile 21 en dehors de la surface du dispositif 1 de saisie de données. D'autres actions, effectuées par l'utilisateur, peuvent permettre une telle validation.

À noter que la saisie d'une touche sur le dispositif 1 de saisie de données peut également s'effectuer en faisant deux contacts rapides/rapprochés sur la dalle tactile 21, mais dans la surface du dispositif 1 de saisie de données évidemment.

### Autres aspects et variantes de mise en œuvre

Les figures 12 à 15 illustrent des variantes de mise en œuvre du clavier du dispositif 1 de saisie de données.

Plus particulièrement, la **figure 12** illustre une première réalisation du clavier dans laquelle la plaque 10 présente, au niveau des touches du premier sous-ensemble 111 de touches, une épaisseur configurée pour permettre une détection d'un doigt par la dalle tactile quand le dispositif 1 de saisie de données est apposé sur la dalle tactile 21.

Les touches du deuxième sous-ensemble 112 présentent quant à elles des motifs/formes représentatifs d'une fonction qui sont creusés à travers la plaque 10 de sorte que le doigt de l'utilisateur soit directement en contact avec la dalle tactile 21 quand le dispositif 1 de saisie de données est apposé sur le terminal 2.

Ces touches creusées mettent en évidence les arêtes remarquables des motifs de sorte à permettre une identification optimale, sans erreur possible.

Ainsi, la plaque 10 présente un changement de niveau entre les touches numériques 111 et les touches fonctionnelles 112. Ce changement de niveau permet aux personnes malvoyantes de repérer facilement les touches numériques et les touches fonctionnelles.

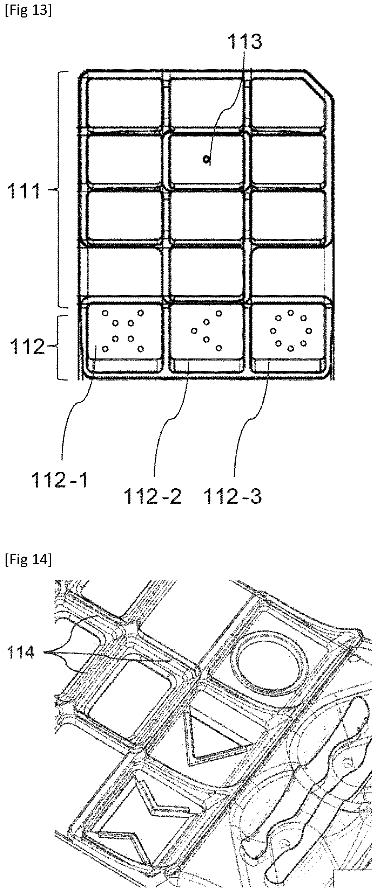

Sur la **figure 13****,** les touches du premier sous-ensemble sont réalisées de manière identique à la figure 12. Ce sont les touches du deuxième sous-ensemble 112 qui différent. En effet, les touches du deuxième sous-ensemble 112 ne sont plus creusées mais leurs motifs sont réalisés avec des points en relief. Les points en relief sont disposés spécifiquement pour que l'utilisateur, même novice, puisse reconnaître les différentes formes de ces touches 112.

De préférence, les touches du deuxième sous-ensemble 112 sont plus basses que les touches numériques, d'environ 0.5 à 1mm par exemple, de sorte à les distinguer aisément des touches du premier sous-ensemble 111. Bien que cela soit peu perceptible, cette différence de hauteur permet tout de même de mieux percevoir les reliefs de la zone interne de chaque touche.

Dans une autre variante, non illustrée, le fond des touches de fonction du deuxième sous-ensemble 112 peut être coloré afin de permettre aux personnes malvoyantes de se repérer plus facilement. Par exemple, les touches, selon leur fonction présentent respectivement un marquage rouge, jaune, ou vert. D'autres couleurs peuvent évidemment être mises en œuvre.

De manière bien connue, les symboles des touches de fonction du deuxième sous-ensemble 112 ont une fonction bien précise, à savoir : une fonction d'annulation pour le symbole/lettre X, une fonction de correction pour le symbole en flèche orientée vers la gauche et une fonction de validation pour le symbole en cercle.

Comme décrit précédemment, chacune de ces variantes présente, au milieu de la touche centrale (généralement la touche numérique 5 du clavier), un téton 113 qui permet à un utilisateur malvoyant de se repérer spatialement sur la plaque 10 du dispositif 1 de saisie de données.

Les **figures 14** **et** **15** illustrent une variante dans laquelle les touches numériques du premier sous-ensemble 111 de touches ne présentent pas de fond. En d'autres termes, la plaque 10 est creuse/traversante au niveau de ces touches.

Ces touches 111 creuses permettent de diminuer la distance entre les doigts et la dalle tactile quand le dispositif 1 de saisie de données est apposé sur la dalle tactile 21. Dans ce cas, les doigts de l'utilisateur viennent même directement au contact de la dalle tactile 21 de sorte à améliorer la détection des appuis sur la dalle tactile 21.

Comme illustré sur la **figure 15****,** les touches sont alors séparées par des profilés 114 qui forment un ou plusieurs fils d'Ariane de sorte à guider l'utilisateur.

Selon cette approche, le téton 113 est alors situé sur le bord latéral gauche de la touche centrale du premier sous-ensemble 111. Le téton 113 joue toujours le même rôle d'aide au repérage pour l'utilisateur.

Les variantes décrites en relation avec les figures 12 à 15 peuvent être appliquées au premier et au deuxième modes de réalisation décrits en détail ci-dessus, et cela sans restriction/limitation particulière. Une combinaison de ces variantes est également envisageable.

Les figures 16 à 18 illustrent différentes mises en œuvre des coussinets 4 qui permettent de maintenir en position, grâce à leur matériau adhérent, la plaque 10 sur la dalle tactile 21 du terminal 2.

La **figure 16** illustre le coussinet 4 mis en œuvre dans le premier mode de réalisation décrit ci-dessus. Le coussinet 4 présente une forme sensiblement rectangulaire et est placé entre les deux pastilles de contact 121a, 121b sur la face inférieure 12 de la plaque 10. Cette position est optimale puisque l'utilisateur appuie sur une des empreintes 31a, 31b située sensiblement en regard du coussinet 4. Le dispositif 1 de saisie de données est donc maintenu en place de manière optimale.

De préférence, cette mise en œuvre privilégie l'utilisation de pastilles de contact 121a, 121b fabriquées dans un matériau souple afin d'éviter que le dispositif 1 de saisie de données soit hyperstatique.

Dans une variante de réalisation illustrée sur la **figure 17****,** le coussinet 4 rectangulaire est remplacé par deux coussinets 4 qui sont placés sensiblement au milieu de la longueur de la face inférieure 12 de la plaque 10 et à proximité des bords latéraux de la plaque 10. Plus précisément, les coussinets 4 sont sensiblement situés en regard des angles inférieurs gauche 116a et droite 116b du premier sous-ensemble 111 de touches. Cette position particulière des deux coussinets 4 sur la face inférieure 12 de la plaque 10 permet d'assurer une adhérence optimale du dispositif 1 de saisie de données sur la dalle tactile 21.

La figure 17 illustre cette mise en œuvre en relation avec le premier mode de réalisation décrit. Toutefois, comme illustré sur la figure 11 notamment, la mise en œuvre de deux coussinets 4 selon cette disposition particulière est également pertinente dans le cas du premier, et du deuxième mode de réalisation.

D'autres variantes (non illustrée) mettant en œuvre davantage de coussinets 4, et selon des dispositions différentes, sur la surface inférieure 12 de la plaque 10 de sorte à optimiser le maintien en position du dispositif 1 de saisie de données sur une dalle tactile sont évidemment envisageables, que ce soit pour le premier ou le deuxième mode de réalisation décrits précédemment.

Le coussinet 4 est de préférence fabriqué dans un matériau particulièrement adhérent et efficace sur les surfaces lisses, comme le verre d'une dalle tactile par exemple.

Par exemple, le matériau utilisé peut être un matériau souple présentant une structure sensiblement identique aux pattes du gecko. Un tel matériau présente une pluralité de micro poils souples sur sa surface. Ainsi, une fois la pression appliquée par l'utilisateur sur la plaque 10, une rétention/succion et une forte résistance au cisaillement sont observées, permettant de maintenir efficacement le dispositif 1 de saisie de données sur la dalle tactile.

La **figure 18** illustre une autre variante de réalisation dans laquelle la plaque 10 présente, sur sa face inférieure 12 et au niveau des angles situés à proximité des pastilles de contact 121a, 121b, des pieds 41 globalement plans, d'épaisseur comprise entre 0,1 et 0,4mm, par exemple.

Les pieds 41 visent à garantir que ce sont les pastilles de contact 121a, 121b qui appuient sur la dalle tactile 21, même si la plaque 10 est un peu tordue par exemple. Ceci évite un boitement du dispositif 1 de saisie, que la plaque 10 soit concave ou convexe.

Dans cet exemple, la face inférieure 12 de la plaque 10 comprend deux coussinets 4 situés sensiblement au milieu de la longueur de la plaque 10 et au niveau des bords latéraux de cette dernière, c'est-à-dire de façon similaire au deuxième mode de réalisation décrit ci-dessus.

Afin d'assurer une bonne adhérence des coussinets 4 sur la dalle tactile 21, la mise en œuvre des pieds 41 au niveau des angles de la plaque 10 permet de faire basculer le dispositif 1 de saisie de données vers les coussinets 4 afin d'assurer un appui optimal des coussinets 4 sur la dalle tactile 21.

Quand le dispositif 1 de saisie de données est apposé sur la dalle tactile 21 et que l'utilisateur maintien ce dernier en appuyant sur une des empreintes 31a, 31b, alors les pieds 41 permettent un basculement qui assure un contact optimal des pastilles de contact 121a, 121b et des coussinets 4 sur la dalle tactile 21.

Les figures 19 à 22 illustrent différents exemples de pose d'un dispositif 1 de saisie de données un terminal 2.

La **figure 19** illustre un exemple d'apposition correcte d'un dispositif 1 de saisie de données sur la dalle tactile 21 d'un terminal 2, qui, dans cet exemple se présente sous la forme d'un smartphone. En effet, comme illustré, le dispositif 1 de saisie de données est apposé sur la dalle tactile et aucune partie du dispositif 1 de saisie de données ne s'étend hors de la dalle tactile 21.

Ainsi, dans cet exemple, le dispositif 1 de saisie de données est correctement posé sur la dalle tactile 21 et il peut alors être détecté efficacement par le terminal 2.

Sur la **figure 20****,** on observe que l'angle supérieure gauche du dispositif 1 de saisie de données dépasse de la dalle tactile 21, c'est-à-dire qu'il s'étend hors de la dalle tactile 21.

Dans ce cas, il est nécessaire de déterminer si la touche située partiellement hors de la dalle tactile peut tout de même être détectée. Par exemple, si au moins 80% de la surface de la touche sont inclus dans la dalle tactile 21, alors on estime que le dispositif 1 de saisie de données est correctement positionné et que la saisie de données via le dispositif 1 de saisie de données peut être effectuée.

Si, dans le cas contraire, moins de 80% de la surface d'une touche sont inclus sur la dalle tactile, alors on estime que le dispositif 1 de saisie de données n'est pas correctement apposé et qu'il doit être déplacé afin d'être détecté correctement. Par exemple, un signal sonore est émis par le terminal 2 afin d'indiquer ce défaut à l'utilisateur.

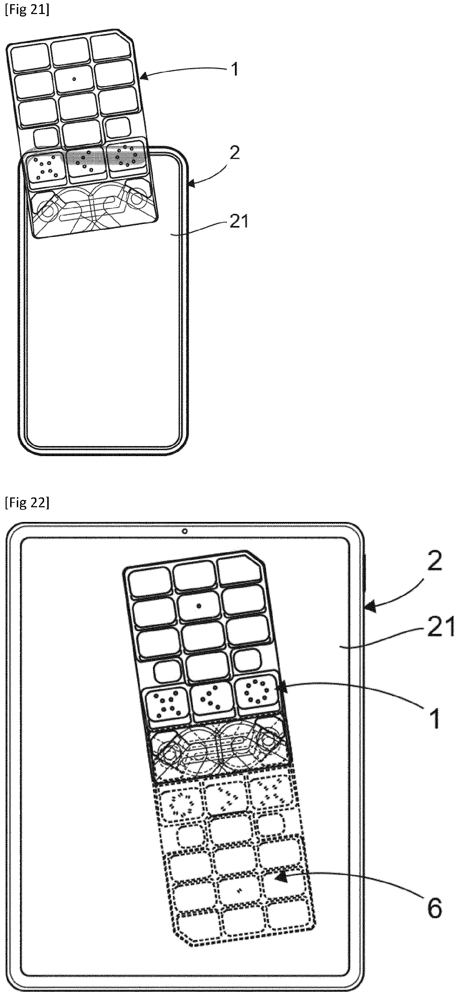

La **figure 21** illustre un exemple dans lequel le dispositif 1 de saisie n'est pas correctement posé sur la dalle tactile 21 du terminal. Dans ce cas, bien que les pastilles de contact 121a, 121b soient détectées par le terminal 2, ce dernier est capable de déterminer que le dispositif 1 de saisie de données n'est pas placé correctement. Un signal sonore est donc émis pour en avertir l'utilisateur.

La **figure 22** illustre un exemple dans lequel le dispositif 1 de saisie de données est posé sur la dalle tactile 21 d'un terminal 2 se présentant sous la forme d'une tablette tactile. Dans ce cas, la dalle tactile 21 présente des dimensions sensiblement supérieures à celles du dispositif 1 de saisie de données. L'utilisateur a donc une plus grande liberté pour poser le dispositif 1 de saisie de données sur la dalle tactile 21.

Sur cette même figure est illustrée en transparence une autre possibilité 6 de pose du dispositif 1 de saisie de données sur la dalle tactile 21. Le terminal 2 possède des moyens de détection lui permettant de détecter précisément la position et l'orientation du dispositif 1 de saisie de données afin de détecter ensuite un appui de l'utilisateur lors de la saisie d'un code confidentielle, par exemple. Notamment, ces moyens de détection sont capables de déterminer l'orientation (paysage, portait ou portrait inversé) du terminal 2 de manière à sélectionner l'orientation optimale du dispositif 1 de saisie de données sur la dalle tactile 21.

Dans un autre mode de réalisation (non illustré), les moyens d'évacuation additionnels 3 des charges électriques concentrées au niveau des pastilles de contact 121a, 121b lorsque le dispositif 1 de saisie de données est apposé sur la dalle tactile 21 d'un terminal 2 se présentent sous la forme d'un câble reliant le dispositif 1 de saisie de données à la masse du terminal 2.

Par exemple, un câble du type USB, Lightning^{®} ou jack audio peut être mis en œuvre. Ainsi, lorsque le dispositif 1 de saisie de données est apposé sur la dalle tactile 21, les charges électriques concentrées au niveau des pastilles de contact 121a, 121b sont évacuées via le câble de sorte à permettre une détection optimale des pastilles de contact 121a, 121b.

Dans une variante du premier mode de réalisation (non illustrée), plutôt que de mettre en œuvre deux languettes conductrices 32a, 32b reliant chacune une pastille de contact 121a, 121b aux deux empreintes 31a, 31b, il est envisageable de mettre en œuvre une languette conductrice reliant électriquement une pastille de contact à une empreinte uniquement. Dans ce cas, il est nécessaire de mettre en œuvre quatre languettes conductrices, chaque languette reliant une pastille de contact à une empreinte.

Plus précisément, cette variante consiste à mettre en œuvre une première languette reliant l'empreinte gauche 32a et la pastille de contact gauche 121b, une deuxième languette reliant l'empreinte droite 32b et la pastille de contact gauche 121b, une troisième languette reliant l'empreinte gauche 32a et la pastille de contact droite 121a et une quatrième languette reliant l'empreinte droite 32b et la pastille de contact droite 121a.

Dans encore une autre variante des premier et deuxième modes de réalisation (non illustrée), il est envisageable de mettre en œuvre une troisième pastille de contact indépendante de sorte à former un triangle de pastilles de contact détectable par la dalle tactile 21 du terminal lorsque le dispositif 1 de saisie de données est apposé sur cette dernière. Cette variante permet de détecter aisément l'orientation du dispositif 1 de saisie de données.

Selon cette variante, la troisième pastille de contact doit également être reliée électriquement aux moyens d'évacuation additionnels 3 des charges électriques.

## Revendications

1. Dispositif (1) de saisie de données destiné à être apposé sur une dalle tactile (21) d'un terminal (2), ladite dalle tactile (21) étant capacitive, ledit dispositif (1) de saisie de données comprenant :
- une plaque (10) sensiblement parallélépipédique comprenant une face inférieure (12), sensiblement plane, d'apposition du dispositif (1) sur la dalle tactile (21), et une face supérieure (11) comprenant une matrice de zones de saisie formant clavier, les zones de saisie étant configurées pour permettre une détection d'un doigt d'un utilisateur par la dalle tactile (21) quand le dispositif (1) est apposé sur la dalle tactile (21) ;
- au moins deux pastilles de contact (121a, 121b) indépendantes l'une de l'autre, c'est-à-dire isolées électriquement l'une par rapport à l'autre, conductrices électriquement et disposées sur la face inférieure (12) ;
**caractérisé en ce que** lesdites pastilles de contact (121a, 121b) sont chacune reliées électriquement à des moyens additionnels d'évacuation (3), vers l'extérieur de la dalle tactile (21), des charges électriques concentrées au niveau des pastilles de contact (121a, 121b) lorsque ledit dispositif (1) de saisie de données est apposé et maintenu sur ladite dalle tactile (21).

2. Dispositif (1) de saisie de données selon la revendication 1, **caractérisé en ce que** lesdits moyens additionnels d'évacuation (3) évacuent, vers le corps de l'utilisateur, les charges électriques concentrées au niveau des pastilles de contact (121a, 121b) lorsque ledit dispositif (1) de saisie de données est apposé et maintenu, via les moyens additionnels d'évacuation (3), par l'utilisateur sur ladite dalle tactile (21) d'un terminal (2).

3. Dispositif (1) de saisie de données selon la revendication 1 ou 2, **caractérisé en ce que** lesdites au moins deux pastilles de contact (121a, 121b) sont respectivement reliées électriquement auxdits moyens additionnels d'évacuation (3) par une résistance électrique (5).

4. Dispositif (1) de saisie de données selon la revendication 2 ou 3, **caractérisé en ce que** lesdits moyens additionnels d'évacuation (3) des charges électriques comprennent au moins une surface de maintien (31a, 31b), par un doigt de l'utilisateur, du dispositif (1) de saisie sur la dalle tactile (21), ladite au moins une surface de maintien (31a, 31b) étant reliée électriquement à chacune desdites au moins deux pastilles de contact (121a, 121b), respectivement via une languette conductrice (32a, 32b).

5. Dispositif (1) de saisie de données selon la revendication 4, **caractérisé en ce que** lesdits moyens additionnels d'évacuation (3) des charges électriques comprennent une première surface de maintien (31a) et une deuxième surface de maintien (31b) du dispositif (1) de saisie de données sur la dalle tactile (21), lesdites première et deuxième surfaces de maintien (31a, 31b) se présentant respectivement sous la forme d'une cavité conformée selon une empreinte d'un pouce gauche et selon une empreinte d'un pouce droit.

6. Dispositif (1) de saisie de données selon la revendication 5, **caractérisé en ce que** lesdites languettes conductrices (32a, 32b) s'étendent chacune à travers lesdites première et deuxième surfaces de maintien (31a, 31b) du dispositif (1) de saisie de données.

7. Dispositif (1) de saisie de données selon la revendication 5 ou 6, **caractérisé en ce que** ladite première surface de maintien (31a) est reliée électriquement à une première pastille de contact (121b) via une première languette conductrice (32a) et à une deuxième pastille de contact (121a) via une deuxième languette conductrice (32b) et ladite deuxième surface de maintien (31b) est reliée électriquement à ladite première pastille (121b) de contact via ladite première languette conductrice (32a) et à ladite deuxième pastille de contact (121a) via ladite deuxième languette conductrice (32b).

8. Dispositif (1) de saisie de données selon la revendication 2, **caractérisé en ce que** lesdits moyens additionnels d'évacuation (3) des charges électriques comprennent un levier (36) actionnable par un utilisateur et relié électriquement avec lesdites au moins deux pastilles de contact (121a, 121b) de sorte à évacuer les charges électriques concentrées au niveau desdites pastilles de contact (121a, 121b) lorsque ledit dispositif (1) de saisie de données est apposé sur ladite dalle tactile (21).

9. Dispositif (1) de saisie de données selon l'une des revendications 1 à 8, **caractérisé en ce que** ladite matrice de zones de saisie formant clavier comprend un premier sous-ensemble (111) de dix touches numériques et un deuxième sous-ensemble (112) de trois touches de fonction, les symboles desdites touches de fonction étant conformés en relief négatif sur ladite face supérieure (11) à ladite face inférieure (12).

10. Dispositif (1) de saisie de données selon l'une des revendications 1 à 9, **caractérisé en ce que** ledit dispositif (1) de saisie de données comprend en outre, sur sa face inférieure (12), des moyens d'adhésion/solidarisation (4) réversibles du dispositif (1) de saisie sur le terminal.

11. Dispositif (1) de saisie de données selon la revendication 10, **caractérisé en ce que** lesdits moyens d'adhésion/solidarisation (4) réversibles se présentent sous la forme d'au moins un coussinet (4) fabriqué dans un matériau souple et adhérent.

12. Procédé (9) de saisie de données sur une dalle tactile (21) d'un terminal (2), ledit procédé comprenant :
- une étape de pose (91), sur une dalle tactile (21) dudit terminal (2), d'un dispositif (1) de saisie de données selon l'une quelconque des revendications 1 à 11 ;
- une étape de liaison capacitive (92) entre lesdites pastilles de contact (121a, 121b) indépendantes et ladite dalle tactile (21) dudit terminal (2),
- une étape de détection (93), par le terminal (2), de la position et de l'orientation dudit dispositif (1) de saisie de données basée sur une détection desdites au moins deux pastilles de contact (121a, 121b) ;
- une étape de saisie, (94) par un utilisateur, de données sur la surface dudit dispositif (1) de saisie de données ;
- une étape de détection (95), par le terminal (2), des données saisies sur la surface dudit dispositif (1) de saisie de données basée sur une détection d'au moins un appui d'un doigt dudit utilisateur sur une des zones de saisie formant clavier ; et
- une étape de validation (96), par un utilisateur, des données saisies ;
**caractérisé en ce qu'**il comprend en outre, une étape d'évacuation (98), via des moyens additionnels d'évacuation (3), des charges électriques concentrées au niveau des pastilles de contact (121a, 121b) tant que ledit dispositif (1) de saisie de données est apposé sur ladite dalle tactile (21) du terminal (2).

13. Procédé (9) selon la revendication 12, **caractérisé en ce que** ladite étape d'évacuation (98) des charges électriques concentrées au niveau des pastilles de contact (121a, 121b) se réalise vers le corps de l'utilisateur, via les moyens additionnels d'évacuation (3), tant que le dispositif (1) de saisie de données est apposé et maintenu, via les moyens additionnels d'évacuation (3), par l'utilisateur sur la dalle tactile (21) du terminal (2).

## Patentansprüche

1. Dateneingabevorrichtung (1), die dazu bestimmt ist, auf einem Touchpanel (21) eines Endgeräts (2) aufgelegt zu werden, wobei das Touchpanel (21) kapazitiv ist, wobei die Dateneingabevorrichtung (1) umfasst:
- eine im Wesentlichen quaderförmige Platte (10), die eine im Wesentlichen ebene Unterseite (12) zum Auflegen der Vorrichtung (1) auf dem Touchpanel (21) und eine Oberseite (11) umfasst, die eine Matrix aus Eingabebereichen umfasst, die eine Tastatur bilden, wobei die Eingabebereiche so konfiguriert sind, dass sie das Erkennen eines Fingers eines Benutzers durch das Touchpanel (21) ermöglichen, wenn die Vorrichtung (1) auf das Touchpanel (21) aufgelegt ist;
- mindestens zwei voneinander unabhängige, d. h. elektrisch voneinander isolierte, elektrisch leitende Kontaktplättchen (121a, 121b), die an der Unterseite (12) angeordnet sind;
**dadurch gekennzeichnet, dass** die Kontaktplättchen (121a, 121b) jeweils elektrisch mit zusätzlichen Mitteln (3) verbunden sind, um elektrische Ladungen, die sich auf Höhe der Kontaktplättchen (121a, 121b) konzentrieren, in Richtung der Außenseite des Touchpanels (21) abzuleiten, wenn die Dateneingabevorrichtung (1) auf das Touchpanel (21) aufgelegt und dort gehalten wird.

2. Dateneingabevorrichtung (1) nach Anspruch 1, **dadurch gekennzeichnet, dass** die zusätzlichen Ableitungsmittel (3) die elektrischen Ladungen, die sich auf Höhe der Kontaktplättchen (121a, 121b) konzentrieren, in Richtung des Körpers des Benutzers ableiten, wenn die Dateneingabevorrichtung (1) vom Benutzer über die zusätzlichen Ableitungsmittel (3) auf das Touchpanel (21) eines Endgeräts (2) aufgelegt und gehalten wird.

3. Dateneingabevorrichtung (1) nach Anspruch 1 oder 2, **dadurch gekennzeichnet, dass** die mindestens zwei Kontaktplättchen (121a, 121b) jeweils mit den zusätzlichen Ableitungsmitteln (3) durch einen elektrischen Widerstand (5) elektrisch verbunden sind.

4. Dateneingabevorrichtung (1) nach Anspruch 2 oder 3, **dadurch gekennzeichnet, dass** die zusätzlichen Ableitungsmittel (3) für die elektrischen Ladungen mindestens eine Fläche (31a, 31b) umfassen, auf der ein Benutzer die Eingabevorrichtung (1) auf dem Touchpanel (21) halten kann, wobei die mindestens eine Haltefläche (31a, 31b) jeweils über eine leitfähige Lasche (32a, 32b) mit jedem der mindestens zwei Kontaktplättchen (121a, 121b) elektrisch verbunden ist.

5. Dateneingabevorrichtung (1) nach Anspruch 4, **dadurch gekennzeichnet, dass** die zusätzlichen Ableitungsmittel (3) für die elektrischen Ladungen eine erste Haltefläche (31a) und eine zweite Haltefläche (31b) für die Dateneingabevorrichtung (1) auf dem Touchpanel (21) umfassen, wobei die erste und die zweite Haltefläche (31a, 31b) jeweils in Form eines Hohlraums vorliegen, der entsprechend einem Abdruck eines linken Daumens und entsprechend einem Abdruck eines rechten Daumens geformt ist.

6. Dateneingabevorrichtung (1) nach Anspruch 5, **dadurch gekennzeichnet, dass** sich die leitfähigen Laschen (32a, 32b) jeweils durch die erste und zweite Haltefläche (31a, 31b) der Dateneingabevorrichtung (1) erstrecken.

7. Dateneingabevorrichtung (1) nach Anspruch 5 oder 6, **dadurch gekennzeichnet, dass** die erste Haltefläche (31a) über eine erste leitfähige Lasche (32a) mit einem ersten Kontaktplättchen (121b) und über eine zweite leitfähige Lasche (32b) mit einem zweiten Kontaktplättchen (121a) elektrisch verbunden ist und die zweite Haltefläche (31b) über die erste leitfähige Lasche (32a) mit dem ersten Kontaktplättchen (121b) und über die zweite leitfähige Lasche (32b) mit dem zweiten Kontaktplättchen (121a) elektrisch verbunden ist.

8. Dateneingabevorrichtung (1) nach Anspruch 2, **dadurch gekennzeichnet, dass** die zusätzlichen Ableitungsmittel (3) für die elektrischen Ladungen einen von einem Benutzer bedienbaren Hebel (36) umfassen, der mit den mindestens zwei Kontaktplättchen (121a, 121b) elektrisch verbunden ist, so dass die elektrischen Ladungen, die sich auf Höhe der Kontaktplättchen (121a, 121b) konzentrieren, abgeleitet werden, wenn die Dateneingabevorrichtung (1) auf das Touchpanel (21) aufgelegt ist.

9. Dateneingabevorrichtung (1) nach einem der Ansprüche 1 bis 8, **dadurch gekennzeichnet, dass** die eine Tastatur bildende Matrix aus Eingabebereichen eine erste Untergruppe (111) von zehn numerischen Tasten und eine zweite Untergruppe (112) von drei Funktionstasten umfasst, wobei die Symbole der Funktionstasten auf der Oberseite (11) gegenüber der Unterseite (12) als Negativrelief ausgebildet sind.

10. Dateneingabevorrichtung (1) nach einem der Ansprüche 1 bis 9, **dadurch gekennzeichnet, dass** die Dateneingabevorrichtung (1) auf ihrer Unterseite (12) ferner Mittel (4) zum umkehrbaren Anbringen/Fixieren der Eingabevorrichtung (1) am Endgerät umfasst.

11. Dateneingabevorrichtung (1) nach Anspruch 10, **dadurch gekennzeichnet, dass** die reversiblen Anbringungs-/Fixierungsmittel (4) in Form mindestens eines Polsters (4) aus einem weichen und haftenden Material vorliegen.

12. Verfahren (9) zum Eingeben von Daten auf einem Touchpanel (21) eines Endgeräts (2), wobei das Verfahren umfasst:
- einen Schritt des Auflegens (91) einer Dateneingabevorrichtung (1) nach einem der Ansprüche 1 bis 11 auf ein Touchpanel (21) des Endgeräts (2);
- einen Schritt des Herstellens einer kapazitiven Verbindung (92) zwischen den unabhängigen Kontaktplättchen (121a, 121b) und dem Touchpanel (21) des Endgeräts (2),
- einen Schritt des Erkennens (93) der Position und der Ausrichtung der Dateneingabevorrichtung (1) durch das Endgerät (2) basierend auf dem Erkennen der mindestens zwei Kontaktplättchen (121a, 121b);
- einen Schritt des Eingebens (94) von Daten auf die Oberfläche der Dateneingabevorrichtung (1) durch einen Benutzer;
- einen Schritt des Erkennens (95) der auf der Oberfläche der Dateneingabevorrichtung (1) eingebenen Daten durch das Endgerät (2) basierend auf dem Erkennen von mindestens einem Fingertipp des Benutzers auf einen die Tastatur bildenden Eingabebereiche; und
- einen Schritt des Bestätigen (96) der eingegebenen Daten durch einen Benutzer;
**dadurch gekennzeichnet, dass** es ferner einen Schritt des Ableitens (98) von elektrischen Ladungen, die sich auf Höhe der Kontaktplättchen (121a, 121b) konzentrieren, über zusätzliche Ableitungsmittel (3) umfasst, solange die Dateneingabevorrichtung (1) auf dem Touchpanel (21) des Endgeräts (2) aufgelegt ist.

13. Verfahren (9) nach Anspruch 12, **dadurch gekennzeichnet, dass** der Schritt des Ableitens (98) von elektrischen Ladungen, die sich auf Höhe der Kontaktplättchen (121a, 121b) konzentrieren, über die zusätzlichen Ableitungsmittel (3) in Richtung des Körpers des Benutzers erfolgt, solange die Dateneingabevorrichtung (1) vom Benutzer über die zusätzlichen Ableitungsmittel (3) auf dem Touchpanel (21) des Endgeräts (2) aufgelegt und gehalten wird.

## Claims

1. A data entry device (1) intended to be affixed to a touch panel (21) of a terminal (2), said touch panel (21) being capacitive, said data entry device (1) comprising:
- a substantially parallelepipedal plate (10) comprising a lower face (12), substantially planar, for affixing the device (1) to the touch panel (21), and an upper face (11) comprising a matrix of entry areas forming a keyboard, the entry areas being configured to allow a detection of a user's finger by the touch panel (21) when the device (1) is affixed to the touch panel (21);
- at least two contact pads (121a, 121b) independent of each other, that is to say electrically insulated in relation to each other, electrically conductive and arranged on the lower face (12);
**characterized in that** said contact pads (121a, 121b) are each electrically connected to additional means (3) for evacuating, towards the outside of the touch panel (21), the electric charges concentrated at the contact pads (121a, 121b) when said data entry device (1) is affixed and held on said touch panel (21).

2. The data entry device (1) according to claim 1, **characterized in that** said additional evacuation means (3) evacuate, towards the user's body, the electric charges concentrated at the contact pads (121a, 121b) when said data entry device (1) is affixed and held, via the additional evacuation means (3), by the user on said touch panel (21) of a terminal (2).

3. The data entry device (1) according to claim 1 or 2, **characterized in that** said at least two contact pads (121a, 121b) are respectively electrically connected to said additional evacuation means (3) by an electrical resistor (5).

4. The data entry device (1) according to claim 2 or 3, **characterized in that** said additional means (3) for evacuating the electric charges comprise at least one surface (31a, 31b) for holding, by a user's finger, the entry device (1) on the touch panel (21), said at least one holding surface (31a, 31b) being electrically connected to each of said at least two contact pads (121a, 121b), respectively via a conductive tab (32a, 32b).

5. The data entry device (1) according to claim 4, **characterized in that** said additional means (3) for evacuating the electric charges comprise a first surface (31a) and a second surface (31b) for holding the data entry device (1) on the touch panel (21), said first and second holding surfaces (31a, 31b) respectively being in the form of a cavity shaped according to a print of a left thumbprint and according to a print of a right thumbprint.

6. The data entry device (1) according to claim 5, **characterized in that** said conductive tabs (32a, 32b) each extend through said first and second surfaces (31a, 31b) for holding the data entry device (1).

7. The data entry device (1) according to claim 5 or 6, **characterized in that** said first holding surface (31a) is electrically connected to a first contact pad (121b) via a first conductive tab (32a) and to a second contact pad (121a) via a second conductive tab (32b) and said second holding surface (31b) is electrically connected to said first contact pad (121b) via said first conductive tab (32a) and to said second contact pad (121a) via said second conductive tab (32b).

8. The data entry device (1) according to claim 2, **characterized in that** said additional means (3) for evacuating the electric charges comprise a lever (36) operable by a user and electrically connected with said at least two contact pads (121a, 121b) so as to evacuate the electric charges concentrated at said contact pads (121a, 121b) when said data entry device (1) is affixed to said touch panel (21).

9. The data entry device (1) according to any of claims 1 to 8, **characterized in that** said matrix of entry areas forming a keyboard comprises a first subset (111) of ten numeric keys and a second subset (112) of three function keys, the symbols of said function keys being shaped in negative relief on said upper face (11) to said lower face (12).

10. The data entry device (1) according to any of claims 1 to 9, **characterized in that** said data entry device (1) further comprises, on its lower face (12), means (4) for reversibly adhering/securing the entry device (1) on the terminal.

11. The data entry device (1) according to claim 10, **characterized in that** said reversible adhesion/securing means (4) are in the form of at least one cushion (4) manufactured from a flexible and adherent material.

12. A method (9) for entering data on a touch panel (21) of a terminal (2), said method comprising:
- a step of laying (91), on a touch panel (21) of said terminal (2), a data entry device (1) according to any one of claims 1 to 11;
- a step of establishing a capacitive connection (92) between said independent contact pads (121a, 121b) and said touch panel (21) of said terminal (2),
- a step of detecting (93), by the terminal (2), the position and the orientation of said data entry device (1) based on a detection of said at least two contact pads (121a, 121b);
- a step of entering (94), by a user, data on the surface of said data entry device (1);
- a step of detecting (95), by the terminal (2), the data entered on the surface of said data entry device (1) based on a detection of at least one tap of a finger of said user on one of the entry areas forming a keyboard; and
- a step of confirming (96), by a user, the entered data;
**characterized in that** it further comprises a step of evacuating (98), via additional evacuation means (3), the electric charges concentrated at the contact pads (121a, 121b) as long as said data entry device (1) is affixed to said touch panel (21) of the terminal (2).

13. The method (9) according to claim 12, **characterized in that** said step of evacuating (98) the electric charges concentrated at the contact pads (121a, 121b) is carried out towards the user's body, via the additional evacuation means (3), as long as the data entry device (1) is affixed and held, via the additional evacuation means (3), by the user on the touch panel (21) of the terminal (2).
